(19) Europäisches Patentamt
European Patent Office
Office européen des brevets

(11) **EP 2 487 547 B1**

(12) **FASCICULE DE BREVET EUROPEEN**

(45) Date de publication et mention de la délivrance du brevet:
**09.08.2017 Bulletin 2017/32**

(51) Int Cl.:
*G04B 21/06* *(2006.01)*   *G05D 13/14* *(2006.01)*
*G10F 1/06* *(2006.01)*   *G04B 17/30* *(2006.01)*
*G05D 13/24* *(2006.01)*

(21) Numéro de dépôt: **11154181.9**

(22) Date de dépôt: **11.02.2011**

(54) **Régulateur de mobile horloger ou de mobile de sonnerie**

Regulator einer Triebfeder eines Uhrwerks oder eines Schlagwerks

Regulator of a clockwork wheel or an alarm wheel

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(43) Date de publication de la demande:
**15.08.2012 Bulletin 2012/33**

(73) Titulaire: **Montres Breguet SA**
**1344 L'Abbaye (CH)**

(72) Inventeurs:
• **Pittet, Jan**
**1347 Le Sentier (CH)**
• **Born, Jean-Jacques**
**1110, Morges (CH)**
• **Conus, Thierry**
**2543, Lengnau (CH)**
• **Goeller, Eric**
**25370, Les Hôpitaux Vieux (FR)**
• **Ragot, Patrick**
**2052, Fontainemelon (CH)**
• **Maréchal, Sylvain**
**39220, Bois-d'Amont (FR)**
• **Sarchi, Davide**
**1020, Renens (CH)**
• **Favre, Jérôme**
**1346, Les Bioux (CH)**

(74) Mandataire: **Giraud, Eric**
**ICB**
**Ingénieurs Conseils en Brevets SA**
**Faubourg de l'Hôpital 3**
**2001 Neuchâtel (CH)**

(56) Documents cités:
**EP-A1- 1 772 791    EP-A1- 2 153 922**
**CH-A- 17 747    CH-A2- 701 227**
**FR-A1- 2 768 242**

• **MOTEKI M ET AL: "Development of Spring Drive Sonnerie", ACTES DU CONGRES EUROPEEN DE CHRONOMETRIE, SOCIETE SUIISE DE CHRONOMETRIE, NEUCHATEL, CH, 26 septembre 2007 (2007-09-26), pages 115-118, XP001551333, ISSN: 1023-2699**

## Description

Domaine de l'invention

L'invention concerne un régulateur de mobile horloger ou de mobile de sonnerie, pour la régulation, autour d'une valeur de vitesse de consigne, de la vitesse de pivotement d'un mobile autour d'un premier axe de pivotement, ledit mobile étant entraîné, par l'intermédiaire de moyens de transmission, par une source d'énergie délivrant un couple mécanique, ledit mobile comportant au moins une masselotte montée pivotante autour d'un pivot primaire autour d'un deuxième axe de pivotement parallèle audit premier axe de pivotement et distant de lui.

L'invention concerne encore un ressort concevant un régulateur à inertie pour la régulation, autour d'une valeur de vitesse de consigne, de la vitesse de pivotement d'un mobile autour d'un premier axe de pivotement, ledit mobile étant entraîné, par l'intermédiaire de moyens de transmission, par une source d'énergie délivrant un couple variable à une vitesse angulaire variable, ledit mobile comportant un pivot principal ou arbre autour dudit premier axe de pivotement, ledit mobile comportant au moins une masselotte montée pivotante autour d'un pivot primaire autour d'un deuxième axe de pivotement parallèle audit premier axe de pivotement et distant de lui, ladite masselotte comportant un pivot secondaire définissant un troisième axe de pivotement parallèle auxdits premier axe de pivotement et deuxième axe de pivotement.

L'invention concerne encore un mécanisme musical ou de sonnerie pour pièce d'horlogerie ou boîte à musique, comportant une source d'énergie ou un barillet, et des moyens de transmission de couple mécanique depuis ladite source d'énergie ou ledit barillet vers un mobile de génération de musique ou de sonnerie.

L'invention concerne encore une pièce d'horlogerie ou boîte à musique comportant un mobile de génération de musique ou de sonnerie.

L'invention concerne le domaine de la régulation mécanique de vitesse pour ensembles tournants.

De façon plus particulière elle concerne le domaine de l'horlogerie, et plus particulièrement celui des pièces d'horlogerie comportant un mécanisme de sonnerie ou un mécanisme musical, telles que montres à sonnerie, boîtes à musique, ou similaires.

Arrière-plan de l'invention :

La fabrication de pièces d'horlogerie ou de boîtes à musique comportant un mouvement musical, ou/et un mécanisme de sonnerie avec complications, nécessite l'emploi de mécanismes d'une régularité de marche d'une qualité comparable à celle du mouvement d'horlogerie qu'elles contiennent, au moins pendant le déroulement d'un cycle musical ou de sonnerie où, même si on ne recherche pas une durée immuable dans le temps de ce cycle, il convient absolument de respecter le rythme imposé à la séquence musicale ou de sonnerie. En effet, tout défaut est audible, et désagréable pour son utilisateur, et d'autant plus quand il s'agit d'une pièce de coût élevé.

Une source d'énergie, généralement constituée par un barillet de sonnerie, fournit en général de l'énergie pour lever un ou plusieurs marteaux de percussion sur des timbres, résonateurs, gongs, ou cloches, ou encore sur une caisse de résonance dans le cas d'une boîte à musique. La vibration de ces timbres ou similaires est transmise à la carrure, aux lunettes, à la glace, de la pièce d'horlogerie, qui rayonnent dans l'air. L'appel d'énergie se fait généralement par un dispositif à cames, ou à dents, tel qu'une roue de sonnerie simple ou multiple, actionné par une ancre ou un dispositif déclencheur commandé par le mouvement d'horlogerie ou par l'utilisateur dans le cas d'une fonction réveil ou alarme. La quantité d'énergie consommée pour armer un marteau est très élevée en comparaison de celle nécessaire au fonctionnement du mouvement d'horlogerie. Aussi la source d'énergie du mécanisme de sonnerie, généralement un barillet à ressort, doit-elle être largement dimensionnée pour éviter à l'utilisateur des remontages ou des rechargements trop fréquents, que cette source d'énergie soit mécanique, électrique, ou autre.

La consommation d'énergie par le mécanisme de sonnerie se caractérise par des consommations instantanées élevées, ce qui influence aussi un dimensionnement important de la source d'énergie, pour assurer en particulier la tenue en fatigue.

De surcroît, il n'est pas rare d'assister à un emballement du mécanisme de sonnerie, sous l'effet conjugué, d'une part de la libération brusque d'une quantité importante d'énergie largement disponible au niveau de la source d'énergie, et d'autre part de l'inertie. Les conséquences sont préjudiciables, en particulier quant à la nature de la séquence de sonnerie suivante qui peut être erronée, ou, plus grave, une sonnerie suivante non effectuée à la bonne heure.

Pour éviter l'emballement, il est connu d'utiliser, sur les pendules et horloges, des régulateurs à ailettes, qui freinent la rotation par l'effet du frottement de l'air. De tels dispositifs sont encombrants, et ne peuvent être correctement intégrés dans des montres.

La régulation du tempo de la sonnerie, ou de la mélodie selon le cas, est faite par un régulateur, qui stabilise la vitesse de désarmage du barillet utilisé pour la sonnerie, qui peut être le barillet du mouvement, ou un barillet séparé comme c'est généralement le cas sur les pendules.

Les régulateurs de sonnerie connus sont basés ainsi sur des frottements, ou encore sur des chocs, ils sont souvent difficiles à réaliser, imprécis au niveau de la vitesse, et très souvent bruyants, ce qui n'est pas acceptable pour une pièce d'horlogerie musicale ou à grande sonnerie de prix élevé.

La régulation de cette vitesse, quand elle existe, est traditionnellement faite avec un système à ancre ou avec un régulateur mécanique à masselottes comme celui décrit par le brevet CH 34 au nom de Barbezat-Baillot, consommateurs d'énergie et qui peuvent être volumineux. Les régulateurs connus sont peu précis, et ne permettent pas de limiter de façon précise la dérive de la vitesse angulaire.

Le document de brevet EP 1 772 791 A1 au nom de Seiko Epson décrit un régulateur sans contact utilisant la résistance de la viscosité d'un fluide, de type centrifuge. Il comporte un rotor alimenté par un barillet au travers d'un rouage, au moins une aile ou masselotte articulée sur ce rotor et radialement mobile sous l'effet de la force centrifuge, rappelée vers le rotor par un ressort de rappel, cette aile se déplaçant au voisinage d'une surface dont elle est écartée d'un jeu prédéterminé, de façon à ce que la résistance apportée par la viscosité d'un fluide (ou de l'aire) entre cette surface et cette aile soit variable selon la position angulaire de l'aile.

De façon similaire, les actes du congrès européen de chronométrie SOCIETE SUISSE DE CHRONOMETRIE, publiés le 26.09.2007, pages 115-118, référence XP 001551333, ISSN 1023-2699, aux noms de M MOTEKI et al., « Development of spring drive sonnerie », décrivent, pour l'animation d'une sonnerie lente, à intervalles de frappe espacés de 3 secondes, un régulateur sans contact, de type centrifuge, comportant des ailettes modifiant la résistance et la viscosité de l'air. Son rotor tourne à vitesse constante du fait d'un équilibrage entre la force du ressort de barillet et la viscosité due à la résistance de l'air. Des ressorts de forme zigzag sont notamment employés pour le rappel de masselottes pivotantes par rapport au rotor.

Le document CH 17 747 A au nom de MAGNENAT LECOULTRE décrit encore un régulateur de vitesse centrifuge avec un rotor sur lequel pivote une masselotte à talon, ce talon appuyant sur une lame de ressort fixée au rotor par un pivot et frottant sur un noyau cylindrique fixe, l'appui du ressort sur le noyau régularisant la vitesse du rotor.

Le moins encombrant est le régulateur à ancre, qui est facilement réalisable et réglable, avec une simple goupille de limitation. En général un tel régulateur fonctionne à haute vitesse, de l'ordre de 100 à 150 oscillations par seconde, ce qui se traduit par 200 à 300 chocs par seconde. Ces chocs génèrent des vibrations transmises à la carrure, aux lunettes, et à la glace, et qui rayonnent dans l'air, comme la sonnerie, avec un bruit qui perturbe le son de la sonnerie.

De plus, de tels régulateurs, basés sur des chocs ou encore sur des frottements, sont difficiles à réaliser, imprécis en ce qui concerne la vitesse régulée, et souvent bruyants.

En somme, dans une pièce d'horlogerie comportant un mécanisme de sonnerie ou une boîte à musique, et notamment dans une montre musicale ou dans une montre à répétition minutes, la variation du tempo est étroitement liée à la courbe de désarmage du ressort de barillet. De fait, dans bien des cas, la sonnerie ou la musique ralentit à la fin de la fonction, ce qui est désagréable pour l'utilisateur. Les régulateurs connus sont encombrants ou/et bruyants.

Résumé de l'invention :

L'invention se propose de pallier ces inconvénients, et de proposer un régulateur pour une pièce d'horlogerie comportant un mécanisme de sonnerie ou une boîte à musique, et notamment dans une montre musicale ou dans une montre à répétition minutes, permettant d'obtenir une vitesse constante, en absorbant les différences de couple dans un rouage de régulation, tout en étant parfaitement silencieux.

L'invention se propose donc de fournir une solution nouvelle au problème de l'emballement, adaptée notamment à des montres.

Il s'agit, en somme, de consommer une partie de l'énergie libérée lors d'un cycle de sonnerie, pour éviter l'emballement.

De façon innovante, l'invention résout ce problème par l'intégration d'un mécanisme consommateur d'énergie. Ainsi, l'invention concerne un dispositif régulateur de mécanisme de sonnerie pour pièce d'horlogerie, qui est agencé pour réguler la puissance consommée au niveau juste utile au mécanisme de sonnerie, et comporte à cette fin des moyens de dissipation d'énergie.

A cet effet, l'invention concerne un régulateur de mobile horloger ou de mobile de sonnerie, pour la régulation, autour d'une valeur de vitesse de consigne, de la vitesse de pivotement d'un mobile autour d'un premier axe de pivotement, ledit mobile étant entraîné, par l'intermédiaire de moyens de transmission, par une source d'énergie délivrant un couple mécanique, ledit mobile comportant au moins une masselotte montée pivotante autour d'un pivot primaire autour d'un deuxième axe de pivotement parallèle audit premier axe de pivotement et distant de lui.

Selon l'invention, ledit régulateur comporte des moyens de rappel de ladite au moins une masselotte vers ledit premier axe de pivotement, et ladite au moins une masselotte est agencée de façon à ce que, quand ledit mobile pivote à une vitesse inférieure ou égale à ladite vitesse de consigne, ladite au moins une masselotte reste confinée dans un premier volume de révolution intérieur autour dudit premier axe de pivotement, et d'autre part à ce que, quand ledit mobile pivote à une vitesse supérieure à ladite vitesse de consigne, ladite au moins une masselotte s'engage, au moins au niveau d'une portion périphérique qu'elle comporte, dans un second volume de révolution autour dudit premier axe de pivotement contigu et extérieur audit premier volume de révolution, et ladite portion périphérique coopérant dans ledit second volume de révolution avec des moyens de régulation agencés pour provoquer le freinage dudit mobile et ramener sa vitesse de pivotement à ladite vitesse de consigne, et pour dissiper l'énergie excédentaire.

Selon une caractéristique de l'invention, ledit régulateur de mobile horloger ou de mobile de sonnerie comporte des moyens de freinage qui interviennent quand ladite partie périphérique des masselottes passe dudit premier volume audit second volume, lesdits moyens de freinage étant constitués, ou bien de moyens de freinage dans l'air, ou d'un aéro-frein déployé à partir de la vitesse de consigne, ou bien de moyens de freinage sec, ou de moyens de friction avec une surface opposant un couple de freinage à ladite partie périphérique desdites masselottes, ou de moyens de friction avec une surface opposant un couple de freinage à la partie périphérique des masselottes et agencée de façon à ce que le couple de freinage appliqué croisse avec le rayon à partir du premier axe de pivotement.

Selon une caractéristique de l'invention, ladite portion périphérique est électriquement conductrice, et lesdits moyens de régulation sont constitués par des moyens de génération d'au moins un champ magnétique variable comportant des lignes de champ orientées de façon à ce que l'interaction entre ladite portion périphérique et ledit champ magnétique génère des courants de Foucault tendant à freiner ledit mobile en s'opposant à son pivotement.

Selon une caractéristique de l'invention, lesdits moyens de rappel sont agencés de façon à, quand ledit mobile pivote à une vitesse inférieure ou égale à ladite vitesse de consigne, maintenir ladite au moins une masselotte confinée dans ledit premier volume de révolution intérieur, et d'autre part à, quand ledit mobile pivote à une vitesse supérieure à ladite vitesse de consigne, autoriser ladite au moins une masselotte à s'engager, au moins au niveau d'une portion périphérique qu'elle comporte, dans ledit second volume de révolution.

Selon une caractéristique de l'invention, lesdits moyens de rappel sont des moyens de rappel mécaniques, et exercent un effort de rappel, dans la direction dudit premier axe de pivotement, sur un pivot secondaire que comporte ladite au moins une masselotte et définissant un troisième axe de pivotement parallèle auxdits premier axe de pivotement et deuxième axe de pivotement.

Selon une caractéristique de l'invention, lesdits moyens de rappel sont des moyens de rappel élastique, qui comportent un premier guidage en pivotement autour d'un pivot principal ou arbre que comporte ledit mobile autour dudit premier axe de pivotement, et qui comportent au moins un second guidage en pivotement autour dudit pivot secondaire que comporte ladite au moins une masselotte autour dudit troisième axe de pivotement.

Selon une caractéristique de l'invention, ledit mobile comporte une pluralité de telles masselottes réparties équidistantes autour dudit premier axe de pivotement, et lesdits moyens de rappel élastique comportent un premier guidage en pivotement autour d'un pivot principal ou arbre que comporte ledit mobile autour dudit premier axe de pivotement, et comportent un second guidage en pivotement autour dudit pivot secondaire que comporte chaque dite masselotte autour dudit troisième axe de pivotement propre à celle-ci.

Selon une caractéristique de l'invention, lesdits moyens de rappel élastique sont constitués par au moins un ressort.

Selon une caractéristique de l'invention, ledit ressort comporte une précontrainte, correspondant à une course radiale de son second guidage en pivotement, selon une direction radiale par rapport audit premier axe de pivotement, quand ledit ressort est guidé par son dit premier guidage sur ledit pivot principal, entre une position à vide dudit ressort et une position d'accrochage dudit ressort sur ledit pivot secondaire de ladite masselotte, ledit mobile et ladite masselotte étant en position d'arrêt, ladite précontrainte tendant, en position d'accrochage dudit ressort, à tirer radialement ledit pivot secondaire de ladite masselotte vers ledit premier axe de pivotement.

Selon une caractéristique de l'invention, la rigidité dudit ressort est définie de façon à ce que la valeur de la force radiale appliquée à ladite masselotte, ramenée audit pivot secondaire, soit une fonction sensiblement affine de la position angulaire de ladite masselotte autour dudit pivot primaire sur ledit deuxième axe de pivotement, par rapport à la position à l'arrêt de ladite masselotte, et pour laquelle une valeur nulle de ladite force radiale correspond, en valeur absolue, à ladite course de précontrainte.

Selon une caractéristique de l'invention, ledit ressort est réalisé dans un matériau micro-usinable, ou silicium, ou quartz ou un de leurs composés, ou un alliage issu de la technologie des MEMS, ou un alliage tel qu'obtenu par le procédé DRIE ou « LIGA », ou en un matériau au moins partiellement amorphe.

Selon une caractéristique de l'invention, lesdites masselottes sont réalisées en matériau électriquement conducteur ou en or, ou en cuivre ou en argent, ou comportent, dans la partie soumise audit champ magnétique dans ladite chambre, une partie réalisée en matériau électriquement conducteur ou en or, ou en argent ou en cuivre, selon une direction parallèle audit premier axe de pivotement.

L'invention concerne encore un ressort concevant un régulateur à inertie pour la régulation, autour d'une valeur de vitesse de consigne, de la vitesse de pivotement d'un mobile autour d'un premier axe de pivotement, ledit mobile étant entraîné, par l'intermédiaire de moyens de transmission, par une source d'énergie délivrant un couple variable à une vitesse angulaire variable, ledit mobile comportant un pivot principal ou arbre autour dudit premier axe de pivotement, ledit mobile comportant au moins une masselotte montée pivotante autour d'un pivot primaire autour d'un deuxième axe de pivotement parallèle audit premier axe de pivotement et distant de lui, ladite masselotte comportant un pivot secondaire définissant un troisième axe de pivotement parallèle auxdits premier axe de pivotement et deuxième axe de pivotement, caractérisé en ce que ledit ressort est agencé pour exercer un effort de rappel, dans la direction dudit premier axe de pivotement, sur ledit pivot secondaire, et rappeler ladite au moins une masselotte vers ledit premier axe de pivotement, et caractérisé en ce que ledit ressort comporte un premier guidage en pivotement autour dudit pivot principal et comporte au moins un second guidage en pivotement autour dudit pivot secondaire de ladite au moins une masselotte.

L'invention concerne encore un mécanisme musical ou de sonnerie pour pièce d'horlogerie ou boîte à musique, comportant une source d'énergie ou un barillet, et des moyens de transmission de couple mécanique depuis ladite source d'énergie ou ledit barillet vers un mobile de génération de musique ou de sonnerie, caractérisé en ce que lesdits moyens de transmission entraînent au moins un dit mobile que comporte un tel régulateur de mobile horloger ou de mobile de sonnerie.

L'invention concerne encore une pièce d'horlogerie ou boîte à musique comportant un mobile de génération de musique ou de sonnerie, caractérisée en ce qu'elle comporte un tel mécanisme musical ou de sonnerie, ou/et un tel régulateur de mobile horloger ou de mobile de sonnerie.

Description sommaire des dessins :

D'autres avantages et caractéristiques de l'invention apparaîtront à la lecture de la description qui va suivre, en référence aux dessins annexés, où :

- la figure 1 représente, de façon schématisée et en vue de côté un régulateur de mobile horloger ou de mobile de sonnerie selon l'invention ;
- la figure 2 représente, de façon schématisée et en coupe passant par un premier axe de pivotement, un régulateur de mobile horloger ou de mobile de sonnerie dans un premier mode de réalisation de l'invention, intégré dans un mécanisme de sonnerie représenté de façon partielle, lui-même intégré dans une pièce d'horlogerie représentée de façon partielle ;
- la figure 3 représente, de façon schématisée et en vue de dessus, une partie du régulateur de la figure 2, et une masselotte mobile que comporte ce régulateur, dans une première position repliée en trait plein, et dans une deuxième position déployée en trait interrompu ;
- la figure 4 représente, de façon schématisée et en vue de dessus, un régulateur réalisé dans le premier mode, avec des masselottes mobiles dans une chambre annulaire ;
- la figure 5 représente, de façon éclatée, le régulateur de la figure 4,
- la figure 6 représente, de façon éclatée, le régulateur de la figure 4, équipé de moyens de rappel élastique des masselottes selon une première variante ;
- la figure 7 représente, de façon schématisée et en vue partielle de dessus, le régulateur de la figure 4, équipé de moyens de rappel élastique des masselottes selon une deuxième variante ;
- la figure 8 représente, de façon schématisée et en vue partielle de dessus, le régulateur de la figure 4, équipé de moyens de rappel élastique des masselottes selon une troisième variante ;
- la figure 9 représente, de façon schématisée et en vue partielle de dessus, le régulateur de la figure 6, avec un nombre différent de masselottes;
- la figure 10 représente, de façon schématisée, une variante de régulateur comportant plusieurs mobiles superposés ;
- la figure 11 représente, de façon schématisée et en vue partielle de dessus, le régulateur de la figure 8, équipé de moyens de rappel élastique des masselottes selon une deuxième variante, dans une exécution préférée de ces moyens de rappel, ceux-ci étant représentés à l'état libre, non accrochés aux masselottes qu'ils ont pour fonction de rappeler ;
- la figure 12 représente le mécanisme de la figure 11, avec ses moyens de rappel accrochés aux masselottes, le mobile étant représenté à l'arrêt ;
- la figure 13 représente le mécanisme de la figure 11, avec ses moyens de rappel accrochés aux masselottes, le mobile étant représenté en pivotement avec ses masselottes en position déployée;
- la figure 14 représente, de façon schématisée et en coupe par le premier axe de pivotement du mobile, les différents volumes d'évolution des masselottes qu'il comporte ;
- la figure 15 est une courbe représentant le couple de freinage en fonction de la vitesse de pivotement, pour deux types différents de régulateurs de vitesse ;
- la figure 16 illustre l'aspect de courbes de couple de freinage C en fonction de la vitesse de pivotement w, correspondant à deux caractéristiques de réglage différentes ;
- la figure 17 est une courbe qui représente la variation de la force de rappel radiale en fonction de l'angle $\alpha$ qui est la variation, par rapport à une position au repos, de la position d'un axe d'attache de moyens de rappel d'une masselotte que comporte le régulateur selon l'invention, par rapport à l'axe de pivotement de cette masselotte ;
- la figure 18 est une vue schématisée, en perspective, d'une version perfectionnée de l'invention ;
- la figure 19 est une courbe illustrant l'évolution des pertes par courants de Foucault en fonction de la position angulaire des masselottes sur leur pivot respectif, dans la réalisation de la figure 18 ;
- la figure 20 est une courbe illustrant l'évolution des pertes par courants de Foucault, toutes choses égales par ailleurs, en fonction du décalage angulaire d'une rangée d'aimants supérieurs par rapport à une rangée d'aimants inférieurs générant ensemble le champ magnétique permettant la régulation de vitesse selon l'invention.

Description détaillée des modes de réalisation préférés :

L'invention concerne le domaine de la régulation mécanique de vitesse pour ensembles tournants.

L'invention concerne en particulier le domaine de l'horlogerie, et plus particulièrement celui des pièces d'horlogerie comportant un mécanisme de sonnerie, et sera plus précisément décrite pour cette application préférée. Néanmoins l'invention est applicable à la régulation de vitesse de pivotement pour tout ensemble tournant, quelque soit son échelle.

Dans cette description d'une utilisation préférée de l'invention, l'invention concerne un mécanisme régulateur de mobile horloger ou de mobile de sonnerie 1, pour une pièce d'horlogerie ou une boîte à musique, que l'on désignera ci-après sous le terme générique de « pièce d'horlogerie ».

Ce régulateur de mobile horloger ou de mobile de sonnerie 1 est destiné à réguler le fonctionnement d'un mécanisme, et en particulier dans l'application particulière exposée en détail ci-après et illustrée par les figures, d'un mécanisme musical ou de sonnerie 10. On désignera dans la suite de l'exposé par « régulateur de mobile horloger ou de mobile de sonnerie 1 » un régulateur de mobile horloger, notamment de mobile de sonnerie ou de mouvement musical, et par «mécanisme de sonnerie 10» un mécanisme musical ou de sonnerie. L'homme du métier saura appliquer l'invention à la régulation d'autres mobiles horlogers.

L'exemple de l'application à un mécanisme de sonnerie tient compte de contraintes particulières, qui résident dans une régulation nécessairement très précise, de préférence meilleure que 3%, toute dérive étant audible et désagréable pour l'utilisateur, et d'un niveau de bruit qui doit rester très faible par rapport au volume sonore de la sonnerie. L'invention conjugue, à cet effet, précision de régulation et silence.

Ce mécanisme de sonnerie 10 comporte classiquement une source d'énergie ou un barillet, et des moyens 2 de transmission de couple mécanique depuis la source d'énergie ou le barillet vers un mobile de génération de musique ou de sonnerie, ce mobile de génération constitué par des marteaux, leviers, ou similaire. Cette source d'énergie, barillet ou similaire, délivre en général un couple qui varie en fonction du désarmage du ressort. Naturellement le régulateur 1 selon l'invention, qui va être décrit ci-après, peut aussi être utilisé avec une source d'énergie délivrant un couple présumé constant à une vitesse présumée constante, à seule fin de garantir une précision de vitesse de régulation, et de prévenir les aléas tels que chocs ou similaire.

Le déchargement d'un barillet, est associé à une décroissance du couple en fonction du temps, qui est importante, par exemple selon un facteur de quatre environ. La variation de l'enveloppe du couple résiduel sur la roue du régulateur est due à la variation de charge du barillet. Des pics de couple haute fréquence peuvent être associés au chargement de lames musicales. Du fait de leur caractère bref et de l'inertie du système, ces variations de couple haute fréquence sont peu influentes au niveau de la vitesse et sont ainsi négligées.

La quantité d'énergie sous forme de couple, reçue au niveau du mobile d'utilisation, ici un mobile de sonnerie, est donc très variable. Il s'agit de fournir au mobile d'utilisation une énergie aussi régulière que possible, en stabilisant sa vitesse de pivotement d'une part, et en consommant l'énergie excédentaire en début de désarmage du barillet d'autre part.

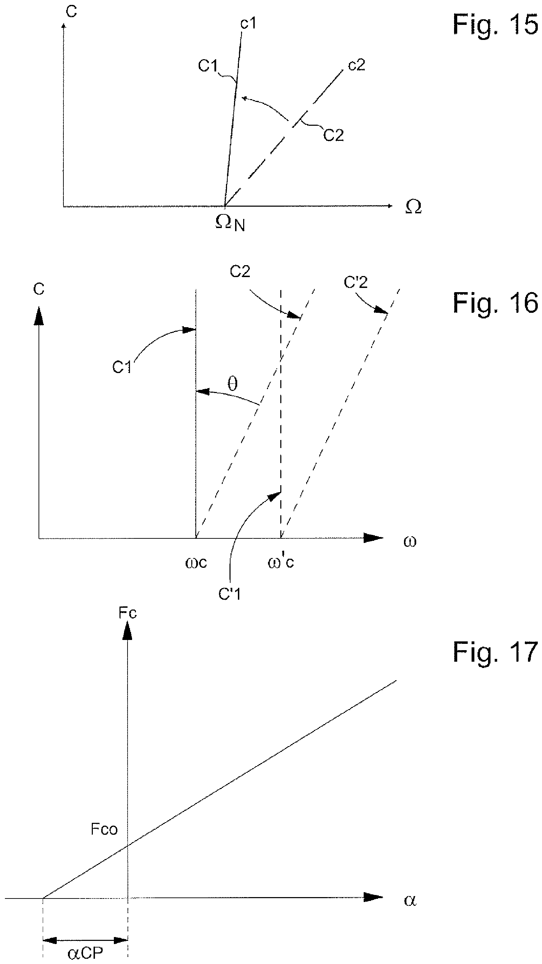

Les caractéristiques du régulateur de vitesse recherché, pour une application particulière, sont une variation de vitesse faible (<3% de la vitesse nominale) et une dissipation de puissance élevée (>6mW). Idéalement, en dessous de la vitesse nominale, le couple de freinage induit par le régulateur doit être nul. A partir de la vitesse nominale, le couple de freinage en fonction de la vitesse doit être très raide. Plus la pente de cette caractéristique est élevée, plus la variation de vitesse est faible. La figure 15 montre la caractéristique de couple typique d'un régulateur de vitesse. La courbe en trait interrompu correspond à un régulateur de vitesse à variation de vitesse importante. A l'opposé, la courbe en trait plein diminue cette variation de vitesse, et a une pente élevée afin de diminuer la sensibilité de la vitesse par rapport au couple, ce que se propose de réaliser l'invention.

On recherche l'obtention d'une caractéristique de dissipation d'énergie en fonction du temps sous la forme d'une puissance exprimée selon la relation $P= f(\omega^n)$, avec n>2, la valeur n=2 correspondant à une puissance homogène au carré du couple, et donc proportionnelle au carré de la vitesse angulaire. L'invention se propose donc d'améliorer autant que possible cette dissipation.

Pour y parvenir de façon optimale, l'invention met en oeuvre, dans une première variante, l'utilisation de masselottes qui sont pivotantes par rapport à un mobile alimenté par la source d'énergie, par l'intermédiaire de moyens de transmission ou/et de moyens de rappel, notamment de moyens de rappel élastique. Dans une seconde variante, l'invention met en oeuvre l'utilisation de courants de Foucault créés par l'interaction entre ces masselottes et un champ magnétique variable, qui permettent de consommer l'énergie excédentaire, par dégagement de chaleur, sans pour autant consommer plus que nécessaire.

De façon préférée, l'invention combine l'utilisation de ces masselottes pivotantes rappelées par des moyens de rappel, et l'utilisation de courants de Foucault créés par l'interaction entre ces masselottes et un champ magnétique variable.

L'invention crée ainsi un freinage à régulation passive, qui est efficace malgré les contraintes de faible volume disponible dans un mouvement d'horlogerie.

Dans un autre mode de réalisation de l'invention, l'utilisation de masselottes pivotantes est combinée à des moyens de compensation de force centrifuge, et à des moyens de freinage.

Le régulateur de mobile horloger ou de mobile de sonnerie 1, est conçu pour la régulation, autour d'une valeur de vitesse de consigne ωc, de la vitesse de pivotement w d'un mobile 3 autour d'un premier axe de pivotement D1. Ce mobile 3 est entraîné, par l'intermédiaire de moyens de transmission 2, par une source d'énergie délivrant un couple mécanique. Ce mobile 3 comporte au moins une masselotte 4 montée pivotante autour d'un pivot primaire 6 définissant un deuxième axe de pivotement D2 parallèle au premier axe de pivotement D1 et distant de lui.

Selon l'invention, le régulateur 1 comporte des moyens de rappel 7 de cette au moins une masselotte 4 vers le premier axe de pivotement D1. Et cette masselotte 4 est agencée de façon à ce que :

- d'une part quand le mobile 3 pivote à une vitesse inférieure ou égale à la vitesse de consigne ωc, cette masselotte 4 reste confinée dans un premier volume VI de révolution autour du premier axe de pivotement D1,

- et d'autre part à ce que, quand le mobile 3 pivote à une vitesse supérieure à la vitesse de consigne ωc, cette masselotte 4 s'engage, au moins au niveau d'une portion périphérique 30 qu'elle comporte, dans un second volume VE de révolution autour du premier axe de pivotement D1 contigu au premier volume de révolution VI.

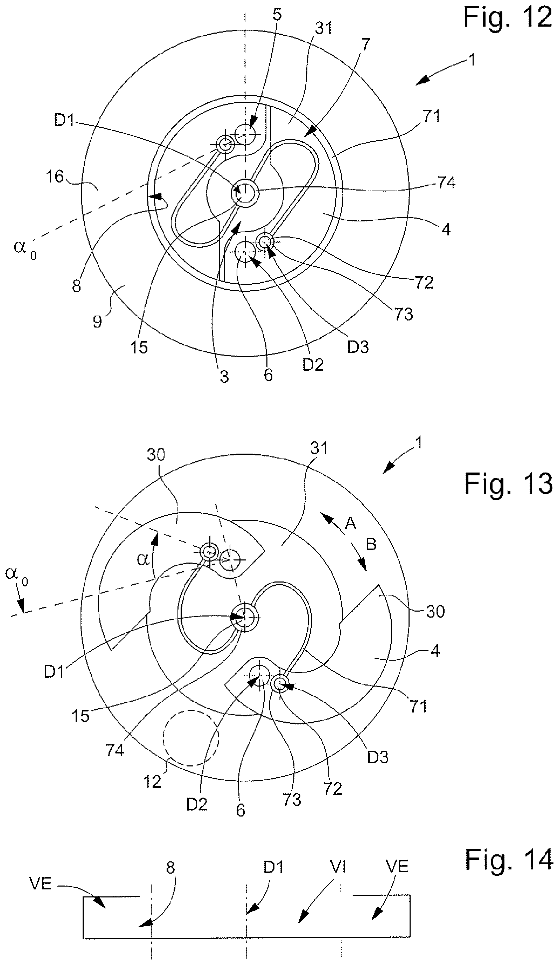

Dans une première configuration, tel que visible sur la figure 14, le second volume VE est extérieur au premier volume VI.

Dans une deuxième configuration, non représentée sur les figures, le second volume VE est intérieur au premier volume VI.

Naturellement, d'autres configurations sont possibles, avec une pluralité de volumes adjacents, qui ont chacun des propriétés particulières pour interagir ou non avec la masselotte 4.

La portion périphérique 30 coopère dans le second volume de révolution VE avec des moyens de régulation agencés pour provoquer le freinage du mobile 3 et ramener sa vitesse de pivotement w à la vitesse de consigne ωc, et pour dissiper l'énergie excédentaire.

De façon particulièrement avantageuse et propre à l'invention, les moyens de rappel 7 sont agencés de façon à, quand le mobile 3 pivote à une vitesse inférieure ou égale à la vitesse de consigne ωc, maintenir cette au moins une masselotte 4 confinée dans le premier volume de révolution intérieur VI, et d'autre part à, quand le mobile 3 pivote à une vitesse supérieure à la vitesse de consigne ωc, autoriser cette masselotte 4 à s'engager, au moins au niveau d'une portion périphérique 30 qu'elle comporte, dans le second volume de révolution VE.

De préférence, les moyens de rappel 7 sont des moyens de rappel mécaniques, et exercent un effort de rappel, dans la direction du premier axe de pivotement

D1, sur un pivot secondaire 72 que comporte cette au moins une masselotte 4 et définissant un troisième axe de pivotement D3 parallèle aux premier axe de pivotement D1 et deuxième axe de pivotement D2.

Avantageusement, les moyens de rappel 7 sont des moyens de rappel élastique, qui comportent un premier guidage en pivotement 74 autour d'un pivot principal 15 ou arbre que comporte le mobile 3 autour du premier axe de pivotement D1, et qui comportent au moins un second guidage en pivotement 73 autour du pivot secondaire 72 que comporte cette au moins une masselotte 4 autour du troisième axe de pivotement D3.

Comme il sera exposé plus loin, ces moyens de rappel élastique 7 comportent de préférence au moins un ressort 71 avec une précontrainte. L'exécution précise de tels ressorts, avec une précharge calculée précisément en fonction d'une vitesse de consigne à maintenir, permet de lever les problèmes d'imprécision de l'art antérieur. La combinaison avec la dissipation par courants de Foucault permet quant à elle d'obtenir très rapidement un régime stabilisé, en dissipant une quantité d'énergie importante en un temps très bref.

Dans un mode particulier de réalisation, le régulateur de mobile horloger ou de mobile de sonnerie 1 comporte des moyens de freinage qui interviennent quand la partie périphérique 30 des masselottes 4 passe du premier volume VI au second volume VE. Ces moyens de freinage sont constitués, ou bien de moyens de freinage dans l'air, ou d'un aéro-frein déployé à partir de la vitesse de consigne ωc, ou bien de moyens de freinage sec, ou de moyens de friction avec une surface opposant un couple de freinage à la partie périphérique 30 des masselottes 4, ou de moyens de friction avec une surface opposant un couple de freinage à la partie périphérique 30 des masselottes 4 et agencée de façon à ce que le couple de freinage appliqué croisse avec le rayon à partir du premier axe de pivotement D1.

Ainsi, les moyens de freinage interviennent quand la partie périphérique 30 des masselottes 4 passe du premier volume VI au second volume VE, pour opposer un couple de freinage à la partie périphérique 30 des masselottes 4 de façon à ce que le couple de freinage appliqué croisse avec la position radiale de chaque dite masselotte à partir du premier axe de pivotement D1, au sein du second volume VE.

Le principe de dissipation énergétique préféré, et illustré par les figures, est celui des pertes par courants de Foucault. Un mobile, notamment un disque, ou similaire, électriquement conducteur en pivotement dans un champ magnétique variable, ou encore alternatif, est le siège de courants induits, dits courants de Foucault, qui provoquent des pertes par effet Joule selon l'expression suivante:

$$(2.1) \quad P_{Foucault} \approx \rho . BC^2 . \Omega^2 . e,$$

avec ρ résistivité électrique du matériau conducteur en pivotement, BC l'induction crête vue par le matériau, Ω sa vitesse de pivotement, et e son épaisseur,
et le couple de freinage par courants de Foucault peut s'écrire:

$$(2.2) \qquad M\_\{Foucault\} \approx \rho \cdot BC^2 \cdot \Omega \cdot e$$

Dans une réalisation très simple de l'invention, le régulateur de vitesse étudié comporte un mobile ou un disque électriquement conducteur, par exemple en argent, en pivotement dans un champ magnétique variable, de préférence alternatif, dont le couple de freinage obéit à l'expression 2.2.

La relation couple-vitesse de ce système est une caractéristique purement linéaire dont la pente dépend des paramètres ρ, BC², et e.

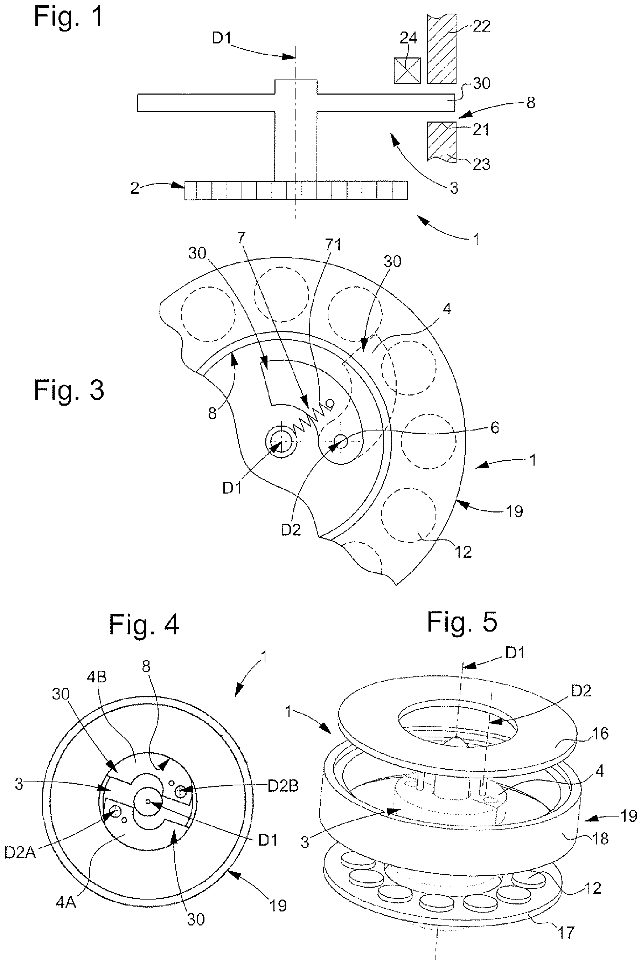

Ce système présente toutefois un couple de freinage à vitesse nominale. De plus, la pente peut être réglée par les paramètres précédemment cités mais avec des valeurs butoirs. En effet, la résistivité a une valeur minimale pour l'argent. On ne peut pas non plus augmenter indéfiniment la valeur de l'induction. Ainsi, il est difficile d'obtenir des pentes très raides dans des volumes acceptables, ce qui amène à considérer un mode préféré de réalisation de l'invention, tel que représenté à la figure 4.

Le régulateur de mobile horloger ou de mobile de sonnerie 1 selon l'invention est conçu pour la régulation, autour d'une valeur de vitesse de consigne ωc, de la vitesse de pivotement w d'au moins un mobile d'utilisation autour d'un premier axe de pivotement D1. Le régulateur de mobile horloger ou de mobile de sonnerie 1 comporte au moins un tel mobile 3, qui est agencé pour être entraîné par les moyens de transmission 2 en pivotement autour de ce premier axe de pivotement D1.

Tel que visible sur la figure 1, ce mobile 3 comporte, directement ou indirectement, au moins une portion périphérique 30 en matériau électriquement conducteur, et au moins une partie de cette portion périphérique 30 est, au moins en dehors de la position d'arrêt du mobile 3, soumise à l'action d'au moins un champ magnétique variable dans une chambre 8, que comporte le régulateur 1, délimitée au moins partiellement par des parties aimantées, que comporte le régulateur 1, ou bien dans une fente 21 entre des pôles magnétiques 22 et 23.

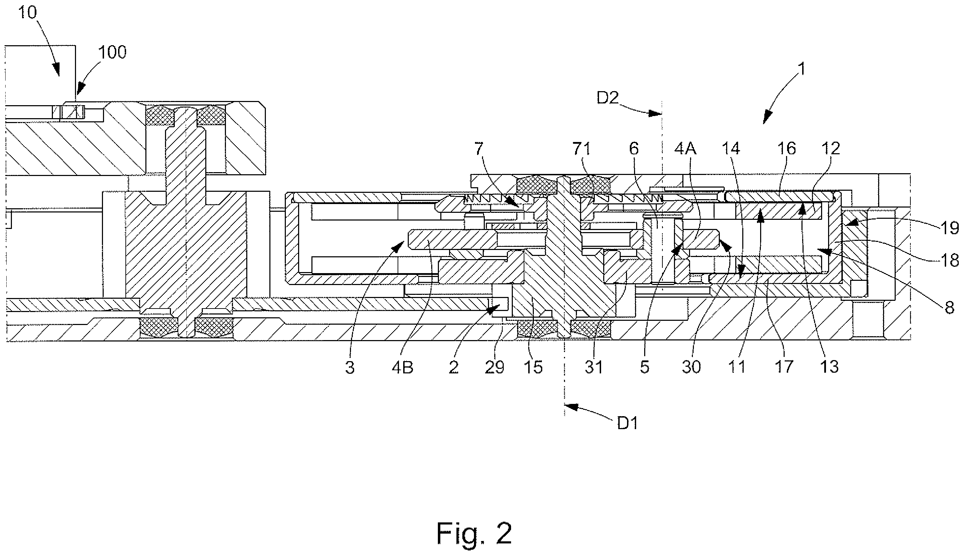

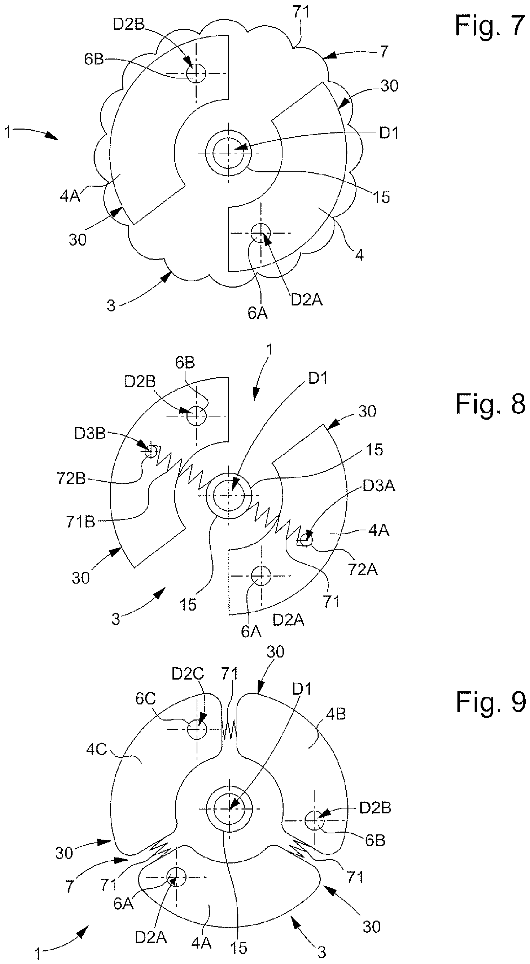

Sous l'effet de l'entraînement par les moyens de transmission de couple 2, le mobile 3 pivote, et cette portion périphérique 30 se meut dans ce champ magnétique variable, notamment dans cette chambre 8 dans une réalisation préférée, de façon à ce que la vitesse de pivotement du mobile 3 soit régulée sous l'action de courants de Foucault induits par l'interaction entre ce champ et cette portion périphérique 30, ou bien ces portions périphériques 30 si le mobile 3 en comporte plusieurs, comme dans le cas préféré des figures 2 à 9, et 11 à 13.

En effet, lorsque le mobile 3 pivote, il y a création, dans le conducteur que représente la portion périphérique 30, d'un courant électrique qui tend à s'opposer au déplacement relatif entre le mobile et le champ magnétique, selon le principe du frein de Foucault, et le couple de freinage augmente quand la vitesse augmente, à surface constante. Naturellement, si la surface périphérique 30 du mobile augmente, le couple de freinage augmente également. Lorsque les différents éléments du régulateur 1 sont bien dimensionnés, la vitesse de désarmage d'un barillet constituant la source d'énergie est bien stabilisée par ce régulateur 1. Le mobile 3 est synchrone avec le mobile de génération de musique ou de sonnerie, dont le tempo est ainsi bien régulé.

Dans une version préférée de l'invention, tel que visible sur les figures 2 à 9, le mobile 3 comporte au moins une masselotte 4, et de préférence une pluralité de telles masselottes 4, chacune montée pivotante autour d'un pivot primaire 6 excentré, fixé au mobile 3, notamment au niveau d'un flasque 31 pivotant entraîné directement ou indirectement par les moyens de transmission 2, et définissant un deuxième axe de pivotement D2 parallèle au premier axe de pivotement D1 et distant de lui. On comprend que, en cas de pluralité de masselottes 4A, 4B, ..., chacune d'elles pivote autour d'un deuxième axe respectif D2A, D2B,... Le pivotement de chaque masselotte 4 se fait, au niveau de moyens de guidage 5, tels qu'un alésage, coopérant avec des moyens de guidage complémentaire 6, tels qu'une goupille, que comporte le mobile 3, ou inversement.

De façon préférée, le centre d'inertie de chaque masselotte 4 est plus éloigné du premier axe de pivotement D1 que ne l'est le pivot primaire 6 de la masselotte 4 concernée.

Selon l'invention, dans la version préférée où la dissipation d'énergie utilise les courants de Foucault, au moins une portion périphérique 30 de chaque masselotte 4 est réalisée en matériau électriquement conducteur ou bien respectivement aimanté, ou encore la masselotte 4 tout entière.

Selon l'invention, au moins une partie de chaque masselotte 4 constitue une portion périphérique 30 et est, au moins en dehors de la position de repos de la masselotte 4 concernée, et de préférence au-delà d'un certain seuil de vitesse de pivotement du mobile 3, dans le cas où au moins une portion périphérique 30 de chaque masselotte 4 est réalisée en matériau électriquement conducteur, soumise à l'action d'au moins un champ magnétique variable, ou alterné, ou sinusoïdal, dans une chambre 8 dans laquelle se meut la masselotte 4, de façon à ce que la vitesse de pivotement du mobile 3 soit régulée sous l'action de courants de Foucault induits par l'interaction entre la chambre 8 et la portion périphérique 30 de la masselotte 4.

Dans le cas alternatif où la au moins une portion périphérique 30 de chaque masselotte 4 est réalisée en matériau aimanté, le mouvement de pivotement du mobile 3 et donc de la masselotte 4 crée un champ magnétique variable, ou alterné, ou sinusoïdal, dans une chambre 8 délimitée au moins partiellement par des parties conductrices, dont l'interaction avec ce champ magnétique génère des courants de Foucault tendant à freiner le mobile en s'opposant à son pivotement.

Cette masselotte 4 doit voir, respectivement générer, un champ magnétique d'amplitude variable. Naturellement, si ce champ est alterné, l'amplitude des variations est d'autant plus forte, et les conditions sont optimales. Mais on peut remarquer qu'une simple variation de champ magnétique entre des zones non magnétisées, à champ nul, d'une part, et des zones soumises à l'action d'aimants, d'autre part, crée aussi les conditions de dissipation par courants de Foucault requises par l'invention.

Dans un mode de réalisation plus particulièrement décrit ci-après, la portion périphérique 30 est électriquement conductrice, et les moyens de régulation de vitesse sont constitués par des moyens de génération d'au moins un champ magnétique comportant des lignes de champ, qui sont orientées de façon à ce que l'interaction entre cette portion périphérique 30 et ce champ magnétique variable génère ces courants de Foucault tendant à freiner le mobile 3 en s'opposant à son pivotement.

L'homme du métier sait effectuer la configuration inverse où la portion périphérique 30 est en matériau aimanté, et où la chambre 8 comporte des surfaces conductrices, et ce mode de réalisation alternatif n'est de ce fait pas détaillé dans la présente description.

Selon l'invention, cette masselotte 4, et de préférence chaque masselotte 4, est agencée de façon à ce que, d'une part quand le mobile 3 pivote à une vitesse inférieure ou égale à la vitesse de consigne ωc, cette masselotte 4 reste confinée dans un premier volume VI de révolution autour du premier axe de pivotement D1, et d'autre part est encore agencée de façon à ce que, quand le mobile 3 pivote à une vitesse supérieure à la vitesse de consigne ωc, cette masselotte 4 s'engage, au moins au niveau d'une portion périphérique 30 qu'elle comporte, dans un second volume VE de révolution autour du premier axe de pivotement D1 contigu et de préférence extérieur au premier volume de révolution VI. Et la portion périphérique 30 coopère dans ce second volume de révolution VE avec des moyens de régulation, qui sont agencés pour provoquer le freinage du mobile 3 et ramener sa vitesse de pivotement w à la vitesse de consigne ωc, et pour dissiper l'énergie excédentaire.

On comprend que le dispositif peut également fonctionner dans une deuxième configuration, où le second volume VE est intérieur au premier volume VI, où toutefois l'efficacité est moindre que dans la première configuration où le second volume VE est extérieur au premier volume VI, car la dissipation est moins importante.

Dans cette deuxième configuration, il est possible de réaliser la masselotte 4 sous forme d'une masselotte à levier, avec sur un premier bras de levier une masse relativement importante soumise à la force centrifuge en périphérie, et sur une deuxième bras de levier une partie conductrice, de moindre inertie, à proximité de l'axe de pivotement du mobile.

Selon l'invention, le régulateur 1 comporte des moyens de rappel 7 d'au moins une masselotte 4, et de préférence de chaque masselotte 4 quand il en comporte plusieurs, vers ce premier axe de pivotement D1.

Ainsi, chaque masselotte 4 est rappelée vers le premier axe de pivotement D1 par des moyens de rappel 7, de préférence par des moyens de rappel élastique 7. Chaque masselotte 4 est mobile entre d'une part une position de repos repliée correspondant à une position d'arrêt du mobile 3, et d'autre part une position d'excentration maximale déployée correspondant à la plus grande vitesse de pivotement du mobile 3, la partie périphérique 30 de chaque masselotte 4 tendant à s'éloigner du premier axe de pivotement D1 sous l'action de la force centrifuge.

De préférence, ces moyens de rappel élastique 7, notamment constitués par au moins un ressort 71, lient chaque masselotte 4 au premier axe de pivotement D1, ou au flasque 31, ou à une autre des masselottes 4. Avantageusement, selon l'invention, les moyens de rappel élastique 7 ont une précharge, qui est déterminée pour permettre aux masselottes 4 de s'excentrer lorsque la vitesse nominale ωc est atteinte. La rigidité des moyens de rappel élastique 7, notamment des ressorts 71, est calculée de manière à compenser la force centrifuge des masselottes 4 pour toute position angulaire de celles-ci.

En dessous de la vitesse nominale ωc, les masselottes 4 restent dans une position repliée à proximité du premier axe de pivotement D1, et sont hors du champ magnétique qui est exercé au niveau d'une chambre 8, champ qui est créé par un ou des aimants 12 montés sur une culasse statorique 19, au niveau de flasques de culasse 16 et 17, tel que visible sur les figures 2, 6, et 13.

Lorsque la vitesse nominale ωc est atteinte, les masselottes 4 s'excentrent et rentrent dans ce champ magnétique créé par les aimants permanents 12.

Le frein par courants de Foucault augmente en fonction de la position angulaire des masselottes 4 sur leur pivot respectif. Ainsi, les moyens de rappel élastique 7, notamment des ressorts 71, sont dimensionnés de sorte que lorsque la vitesse nominale ωc est atteinte, une légère variation de vitesse permette de varier fortement le couple de freinage. La rigidité d'un tel ressort 71 doit être légèrement plus grande que la rigidité nécessaire pour juste équilibrer la force centrifuge pour toute position angulaire. Ainsi, on assure une certaine stabilité d'auto-régulation de vitesse du système.

Ainsi, l'invention crée les conditions d'une mobilité radiale des masselottes 4 uniquement au-delà d'une vitesse de consigne ωc. Pour ce faire, des moyens de rappel radial, vers l'axe du mécanisme, sous forme de ressorts 71 précontraints, constituent une solution particulièrement fiable: un tel ressort compense juste, au niveau de son point d'application à une masselotte 4 pivotante, la force centrifuge appliquée à cette dernière, à la vitesse de consigne ωc.

La courbe de la figure 16 illustre l'aspect d'une courbe de couple de freinage C en fonction de la vitesse de pivotement w. La courbe C1 est la courbe théorique idéale, toute la puissance est consommée à la seule vitesse de consigne ωc. La courbe C2 est la courbe réelle, qui s'écarte d'un angle θ de la précédente. Il s'agit de minimiser cet angle θ, afin de s'approcher au plus près de la situation idéale. L'angle θ est d'autant plus grand que le ressort est rigide. L'intérêt est d'utiliser un ressort 71 de rigidité suffisamment faible pour avoir une courbe caractéristique très raide : ainsi un faible accroissement de la vitesse de pivotement, au-delà de la vitesse de consigne ωc, se traduit par une grande course radiale de la masselotte 4 correspondante, et par la dissipation d'une quantité d'énergie importante, qui est proportionnelle à la surface de la masselotte 4 qui est en interaction avec un champ magnétique variable pour générer des courants de Foucault. Tout particulièrement, ce champ magnétique est généré dans une chambre annulaire 8 périphérique, de façon à ce que la régulation soit efficace quelque soit la position angulaire du mobile à réguler.

Si l'on prend l'exemple d'un barillet tel que représenté sur les figures, il faut pouvoir dissiper, par exemple, pour une régulation aux environs de 3000 tours par minute, quelques mW, de l'ordre de 5 mW. La mise en oeuvre de l'invention, avec les proportions de dimensionnement des composants selon la figure 2, et le choix d'un champ magnétique variable ad hoc permet la dissipation de 8 mW, ce qui est particulièrement favorable.

Dans la réalisation de la figure 2, un rouage de sonnerie entraîne un pignon de régulateur 29, constituant ainsi les moyens de transmission de couple 2. Le mobile 3 comporte un flasque 31 qui porte deux masselottes 4A, 4B, montées chacune libre sur une goupille 6, au niveau d'un alésage 5 que comporte chaque masselotte 4. Sur cette figure, les masselottes 4A, 4B, sont reliées entre elles par un ressort 71, qui constitue les moyens de rappel 7, et qui est monté libre sur un arbre 15 que comporte le mobile 3 portant le pignon de régulateur. En fonction de la vitesse de pivotement de ce dernier, les masselottes 4 pénètrent plus ou moins sous des aimants 12 qui génèrent le champ magnétique variable 8. Plus la pénétration radiale de la partie périphérique 30 des masselottes 4 est importante, et plus le couple de freinage induit par les courants de Foucault est important.

De façon préférée, tel que visible sur les figures 4 à 13, le régulateur 1, et en particulier le mobile 3, comporte une pluralité de masselottes 4. Celles-ci sont de préférence réparties autour du premier axe de pivotement D1 de façon à équilibrer dynamiquement l'ensemble formé du mobile 3 et des masselottes 4 à la vitesse maximale de pivotement du mobile 3.

Les moyens de rappel 7 sont agencés de façon à, quand le mobile 3 pivote à une vitesse inférieure ou égale à la vitesse de consigne ωc, maintenir cette ou chaque masselotte 4 confinée dans le premier volume de révolution intérieur VI, et d'autre part à, quand le mobile 3 pivote à une vitesse supérieure à la vitesse de consigne ωc, autoriser cette masselotte 4 à s'engager, au moins au niveau d'une portion périphérique 30 qu'elle comporte, dans le second volume de révolution VE.

Les moyens de rappel 7 sont de préférence des moyens de rappel mécaniques, et exercent un effort de rappel, dans la direction du premier axe de pivotement D1, sur un pivot secondaire 72 que comporte chaque masselotte 4 et définissant un troisième axe de pivotement D3 parallèle aux premier axe de pivotement D1 et deuxième axe de pivotement D2.

De façon préférée, le pivot secondaire 72 de chaque masselotte 4 est plus éloigné du premier axe de pivotement D1 que ne l'est le pivot primaire 6 de la masselotte 4 concernée.

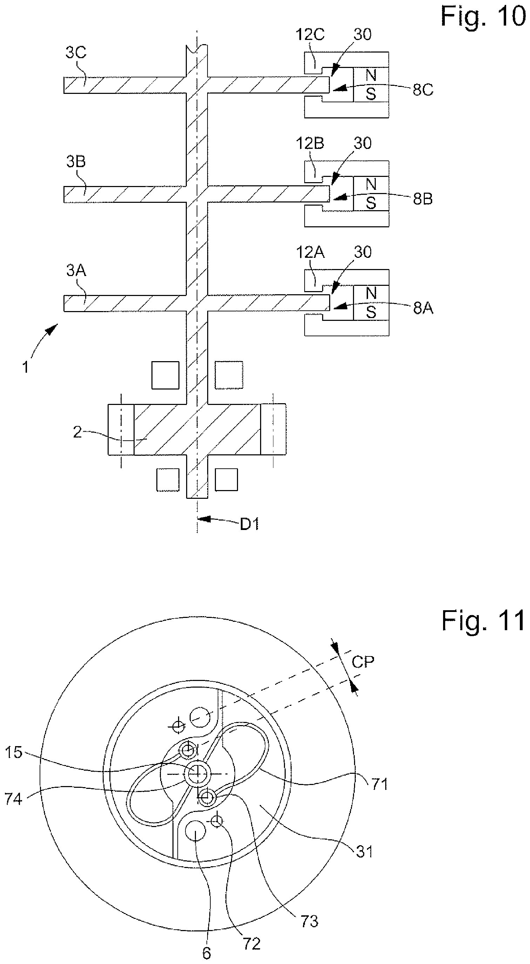

De façon préférée, les moyens de rappel 7 sont des moyens de rappel élastique, et comportent un premier guidage en pivotement 74 autour d'un pivot principal 15 ou arbre que comporte le mobile 3 autour du premier axe de pivotement D1, et comportent au moins un second guidage en pivotement 73 autour de ce pivot secondaire 72, ou bien autour de chaque pivot secondaire 72 quand les moyens de rappel radial élastique 7 sont communs à toutes les masselottes 4, tel que visible sur les figures 11 à 13.

Ainsi, les moyens de rappel élastique 7 ont pour effet de maintenir les masselottes 4 à proximité de l'axe D1 quand le mobile 3 est à l'arrêt, et de limiter le pivotement des masselottes 4 autour de leur deuxième axe de pivotement D2 respectif pendant la prise de vitesse du mobile 3, dans la phase transitoire où les courants de Foucault régulateurs commencent à s'établir. La conception des moyens de rappel élastique 7 détermine une vitesse de consigne, à partir de laquelle la force centrifuge prend le pas sur l'effort de rappel, et écarte les masselottes 4 de l'axe D1, leur permettant d'entrer, ou du moins leur partie périphérique 30, dans le champ magnétique de la chambre 8. Cette vitesse de consigne est de préférence égale à la vitesse de consigne de pivotement ωc du mobile 3. C'est alors que les courants de Foucault induits dans les masselottes 4 les freinent, et transforment l'énergie cinétique en énergie calorifique. De façon préférée, ces moyens de rappel élastique 7 sont constitués par un ou plusieurs ressorts 71. En dimensionnant correctement chaque ressort 71 et la position d'attache entre les masselottes 4 et leur support, il est possible d'obtenir une vitesse de pivotement, pour la position déployée des masselottes 4, qui est légèrement supérieure à la vitesse de pivotement pour la position repliée des masselottes. Cette différence de vitesse correspond à la précision de régulation de vitesse du régulateur 1. En fonction du couple, les masselottes 4 pénètrent plus ou moins dans le champ magnétique, pour dissiper plus ou moins d'énergie.

Les moyens de rappel élastique 7 ont aussi pour effet, quand il y a plusieurs masselottes, d'équilibrer leurs effets et leurs positions. En effet, de préférence, le mobile 3 comporte une pluralité de masselottes 4 réparties équidistantes autour du premier axe de pivotement D1. Et les moyens de rappel élastique 7 comportent un premier guidage en pivotement 74 autour d'un pivot principal 15 ou arbre que comporte le mobile 3 autour du premier axe de pivotement D1, et comportent un second guidage en pivotement 74 autour dudit pivot secondaire 72 que comporte chaque masselotte 4 autour du troisième axe de pivotement D3 qui lui est propre.

De préférence, ces masselottes 4 sont identiques entre elles, leurs deuxièmes axes de pivotement respectifs D2 sont à même distance du premier axe de pivotement D1, et répartis de façon équidistante, et tous les moyens de rappel élastique 7 sont identiques et fixés de façon similaire sur les masselottes 4. Avantageusement ces masselottes 4 sont réparties autour du premier axe de pivotement D1 de façon à équilibrer dynamiquement l'ensemble formé du mobile 3 équipé de ses masselottes 4 à la vitesse maximale de pivotement du mobile 3.

De préférence, les moyens de rappel 7 sont confinés dans le premier premier volume de révolution VI, ainsi que les pivots secondaires 72, quelque soit la position de la ou des masselottes 4.

Naturellement, différentes variantes sont imaginables.

Dans la première variante de la figure 3, les masselottes 4, ici deux masselottes 4A et 4B, sont reliées deux à deux par des moyens de rappel élastique 7, lesquels sont dimensionnés de façon à équilibrer dynamiquement l'ensemble formé du mobile 3 et des masselottes 4 à la vitesse maximale de pivotement du mobile 3.

Dans la deuxième variante de la figure 4, les masselottes 4 sont reliées toutes ensemble par un moyen de rappel élastique 7 unique, lequel est dimensionné de façon à équilibrer dynamiquement l'ensemble formé du mobile 3 et des masselottes 4 à la vitesse maximale de pivotement du mobile 3.

Dans la troisième variante de la figure 5, les masselottes 4 sont reliées chacune par un moyen de rappel élastique 7 indépendant à un arbre 15 que comporte le mobile 3 selon son premier axe de pivotement D1. Ces moyens de rappel élastique 7 sont dimensionnés de façon à équilibrer dynamiquement l'ensemble formé du mobile 3 et des masselottes 4 à la vitesse maximale de pivotement du mobile 3.

Le mode de réalisation préféré, illustré par les figures 11 à 13, est constitué par la combinaison de la deuxième et de la troisième variante.

On comprend que la difficulté est d'agencer les masselottes 4 et les moyens de rappel 7 pour n'autoriser les masselottes à se déployer qu'au-delà d'une certaine vitesse. L'invention propose une solution innovante, selon laquelle les moyens de rappel élastique 7 sont constitués par au moins un ressort 71 lequel comporte une précontrainte. Tel que visible par comparaison des figures 11 et 12, cette précontrainte correspond à une course radiale de précontrainte CP de son second guidage en pivotement 73, selon une direction radiale par rapport au premier axe de pivotement D1, quand le ressort 71 est guidé par son premier guidage 74 sur le pivot principal 15, entre une position à vide du ressort 71 et une position d'accrochage du ressort sur le pivot secondaire 72 de la masselotte 4, le mobile 3 et la masselotte 4 étant en position d'arrêt, la précontrainte tendant, en position d'accrochage du ressort 71, à tirer radialement le pivot secondaire 72 de la masselotte 4 vers le premier axe de pivotement D1.

Le ressort 71 est réalisé de telle façon que la force de rappel sur la masselotte passe toujours par le premier axe de pivotement D1, tel que visible sur les figures 11 à 13, où le premier guidage 74 est un oeil ajusté en pivotement sans frottement autour du pivot principal 15.

En somme, la précontrainte exerce une force de rappel radiale sur le pivot secondaire 72 de masselotte, qui s'oppose à la force centrifuge qui s'y applique du fait de la vitesse de pivotement, et cette précontrainte permet ainsi d'interdire le déploiement des masselottes 4 avant que le mobile 3 ait atteint la vitesse critique, choisie de préférence à la valeur de la vitesse de consigne $\omega c$.

La rigidité dudit ressort 71 est définie de façon à ce que la valeur de la force radiale appliquée à la masselotte 4, ramenée au pivot secondaire 72, soit une fonction sensiblement affine de la position angulaire $\alpha$ de la masselotte 4 autour du pivot primaire 6 sur le deuxième axe de pivotement D2, par rapport à la position à l'arrêt de la masselotte 4, et pour laquelle une valeur nulle de la force radiale correspond, en valeur absolue, à la course de précontrainte CP, tel que visible sur la figure 17, qui représente la variation de la force de rappel radiale en fonction de l'angle $\alpha$ qui est la variation, par rapport à la position au repos de la figure 12, de la position du troisième axe de pivotement D3 par rapport au deuxième axe de pivotement D2.

Dans une autre expression, la force radiale appliquée à la masselotte, au-delà de la course de précontrainte CP du ressort, est une fonction affine de la position radiale, par rapport à l'axe de pivotement D1, du pivot secondaire 72. C'est aussi une fonction linéaire de la distance entre la position, à un instant donné, du pivot secondaire 72, avec la position du point d'accrochage du ressort non monté sur la masselotte 4, tel que visible à la figure 11, ou, plus simplement exprimé, de la distance dont le ressort 71 s'étend. Quand le ressort est accroché sur la masselotte 4, selon la figure 12, cette distance est égale à la course radiale de précontrainte CP.

Cette caractéristique d'une augmentation de la force radiale appliquée à la masselotte 4 sensiblement proportionnelle à l'augmentation de position radiale de son pivot secondaire 72 résulte d'une approximation par lissage d'une courbe obtenue par calcul de l'équilibrage de la force centrifuge quel que soit l'angle de la masselotte.

Un effet supplémentaire est obtenu par l'agencement particulier des pivots entre eux, qui permet d'obtenir un bras de levier variable, qui autorise un large déploiement de la masselotte 4 pour une faible augmentation de vitesse au-dessus de la vitesse de consigne ωc.

Les bras du ressort 71 peuvent avantageusement être réalisés sous forme de serpentin ou encore de spiral, afin de l'assouplir suffisamment pour obtenir la juste rigidité requise et suffisante.

De façon préférée, afin d'obtenir une parfaite répétitivité et une parfaite reproductibilité des phénomènes, le ressort 71 est réalisé dans un matériau micro-usinable, ou silicium, ou quartz ou un de leurs composés, ou un alliage issu de la technologie des MEMS, ou un alliage tel qu'obtenu par le procédé DRIE ou « LIGA », ou en un matériau au moins partiellement amorphe. Ce mode d'élaboration ou/et ce choix de matériau permet aussi d'obtenir un ressort 71 non magnétique, et non magnétisable, non susceptible de subir l'influence du champ magnétique, ni de le diffuser au mouvement d'horlogerie qui entoure le régulateur 1. L'autre avantage est que le module d'Young du ressort varie alors peu avec la température, il n'y a donc pas de dérive de la vitesse de régulation.

Naturellement, le ressort 71 peut aussi être fabriqué de façon classique, avec un matériau à ressort, notamment un acier à ressort, utilisé en horlogerie pour un ressort spiral ou pour un ressort de barillet par exemple.

Il peut toutefois être souhaité de régler la vitesse de consigne. Ceci est possible en modifiant, ou la rigidité du ressort, ou sa précharge, ou les deux. A cet effet, il est possible d'aménager le mécanisme avec un élément statique tel qu'une raquette, faisant par exemple pivoter un flasque intermédiaire non représenté sur les figures, pour décaler la courbe, tel que visible sur la figure 16 où l'on substitue une caractéristique C'2 à une caractéristique C2, en effectuant un décalage d'origine correspondant à une autre valeur de la vitesse de consigne. L'emploi de cette raquette en usine autorise un ajustement précis à la valeur désirée. Dans une alternative avantageuse, non représentée sur les figures, le ressort 71 comporte, côte à côte, une pluralité de guidages en pivotement 73, chacun constitué d'un oeil agencé pour coopérer avec le pivot secondaire 72 de la masselotte 4, chaque oeil correspondant à un réglage particulier mémorisable et reproductible, ce qui permet un préréglage facile en usine. Ces yeux 73 peuvent être disposés en ligne, en quinconce, ou autre, et sont de préférence référencés pour faciliter le montage. Cette disposition est préférable à celle de la raquette, car elle évite tout appui sur le ressort.

Les moyens de génération d'au moins un champ magnétique variable sont, pour une montre, de préférence constitués par des aimants permanents 12, qui sont disposés de part et d'autre d'une chambre 8, dans laquelle évolue la partie périphérique 30 de chaque masselotte 4 à certaines plages de vitesse, ces aimants permanents 12 étant de polarités opposées deux à deux, de part et d'autre de ladite chambre 8.

De façon préférée, afin de ne pas créer d'interférence avec le mouvement ou le mécanisme de la pièce d'horlogerie, la chambre 8, dans laquelle est établi le champ magnétique, est délimitée par un écran d'isolation magnétique 9. De préférence, ces aimants permanents 12 sont disposés à la périphérie intérieure 11 d'une culasse 19 entourant la chambre 8, cette culasse 19 étant de préférence délimitée par cet écran d'isolation magnétique 9, et les aimants permanents 12 sont, de part et d'autre de la chambre 8, alignés selon une direction sensiblement parallèle au premier axe de pivotement D1. Dans un exemple non limitatif tel que visible sur les figures 2 et 3 à 5, la chambre 8 est délimitée par une culasse 19 comportant deux flasques de culasse supérieur 16 et inférieur 17, reliés par un anneau de culasse 18.

Dans une réalisation préférée visible sur ces figures, la chambre 8 est de révolution autour du premier axe de pivotement D1.

Le champ magnétique variable établi à l'intérieur de la chambre peut être généré de différentes façons. Pour une pièce d'horlogerie statique telle qu'une pendule, ou pour une boîte à musique, l'emploi d'électro-aimants alimentés par le secteur ou par batterie est envisageable.

Ainsi, de façon préférée, la chambre 8 comporte, à sa périphérie intérieure 11, une pluralité d'aimants permanents 12 agencés pour créer le champ magnétique. De façon préférée, ces aimants permanents 12 sont agencés de façon à créer, dans la chambre 8, des lignes de champ parallèles au premier axe de pivotement D1 du mobile 3. Le champ magnétique dans la chambre 8 ou dans l'entrefer est ainsi axial, le régulateur est à flux axial.

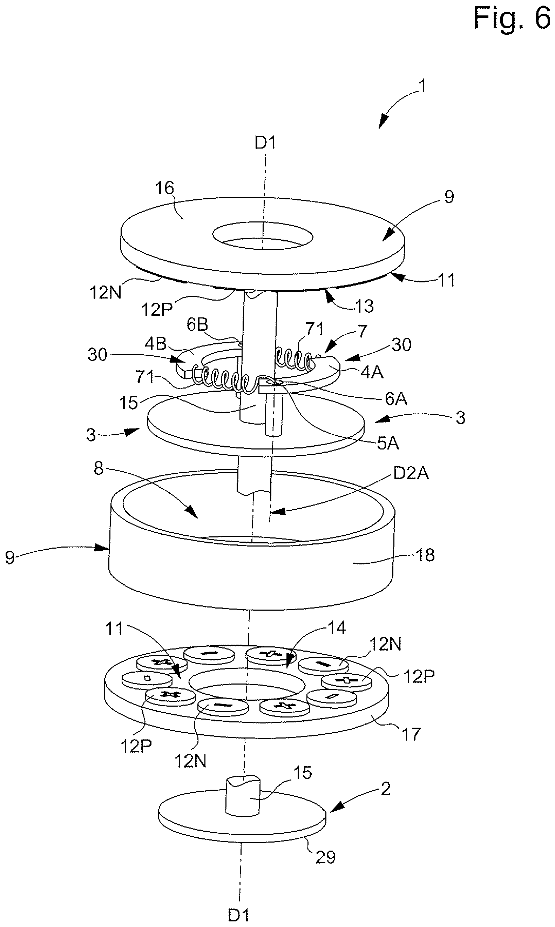

Dans une réalisation particulière, tel que visible sur la figure 6, les aimants permanents 12 sont agencés deux à deux sur des surfaces opposées 13; 14 que comporte la chambre 8 et se faisant face, de façon à créer, dans la chambre 8, des lignes de champ parallèles au premier axe de pivotement D1 du mobile 3. Et de préférence, chaque masselotte 4 est mobile entre ces aimants permanents 12 opposés et disposés de part et d'autre de sa trajectoire.

Dans une autre variante de réalisation, également visible sur la figure 6, les aimants permanents 12 sont montés, sur une même surface 13 ou 14, en nombre pair, avec des polarités alternées de façon à ce que le champ magnétique traversé par chaque masselotte 4 au cours de sa trajectoire soit un champ magnétique alternatif d'intensité maximale. Le champ magnétique est dans un premier sens sous un pôle donné, et de sens inverse sous le pôle immédiatement voisin. Ainsi, lorsque le mobile 3 pivote, chaque masselotte 4 voit un champ périodique harmonique, de forme sinusoïdale. En particulier, la culasse 19 comporte, de part et d'autre de la chambre 8, un premier flasque 16 porteur d'une première série d'aimants permanents 12, et un second flasque 17 porteur d'une seconde série d'aimants permanents 12, et ces premier flasque 16 et second flasque 17 comportent chacun un nombre pair d'aimants permanents 12 qui sont montés avec des polarités alternées en périphérie du flasque concerné, de façon à ce que le champ magnétique, vu depuis une portion périphérique 30 de masselotte 4 en mouvement, soit un champ magnétique alternatif.

Dans une autre variante de réalisation, non illustrée sur les figures, les aimants permanents 12 sont montés, sur une même surface 13 ou 14, avec des polarités non alternées, selon une répétition circulaire du centre, angle total, rayon et occurrence variables, de façon à ce que le champ magnétique vu depuis une portion périphérique 30 de masselotte 4 en mouvement au cours de sa trajectoire soit un champ magnétique variable alternatif.

Comme il a déjà été signalé plus haut, la variabilité du champ magnétique vu depuis la partie périphérique d'une masselotte, est la condition de création des courants de Foucault, et de la dissipation d'énergie. De ce fait, même si l'on décrit ici des réalisations préférées, il faut comprendre que le système fonctionne aussi avec un nombre d'aimants qui n'est pas pair, ou encore avec des aimants qui ont tous la même polarité, Les exemples proposés ici sont surtout ceux qui autorisent la meilleure dissipation, et la plus régulière, et ne sont aucunement limitatifs.

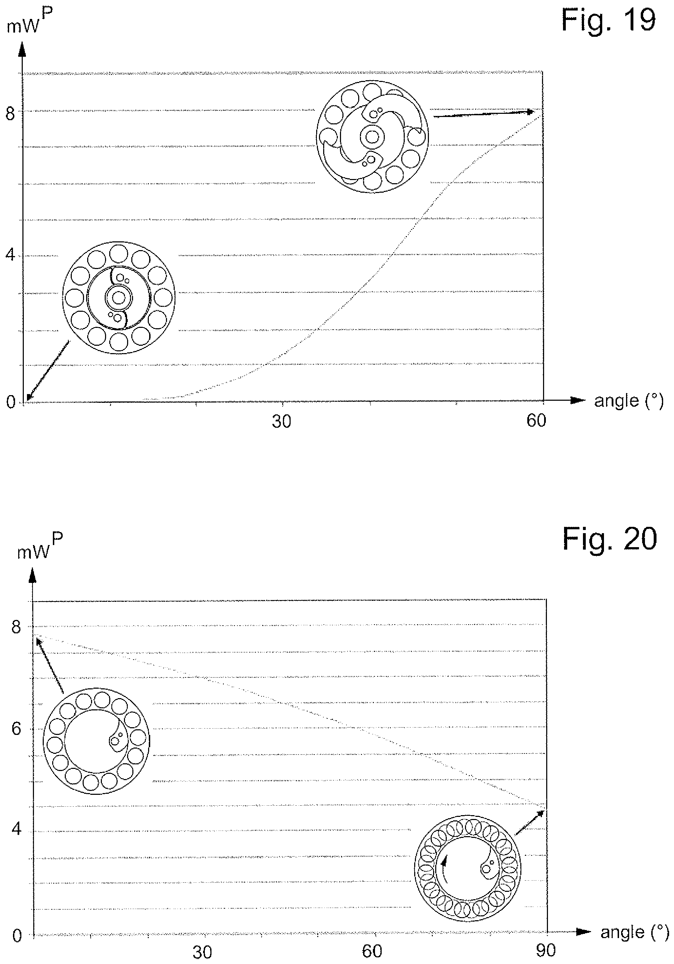

Dans une réalisation particulière, le premier flasque 16 et le second flasque 17 sont mobiles en pivotement l'un par rapport à l'autre autour du premier axe de pivotement D1 de façon à, selon leur position relative, aligner les lignes de champ parallèlement audit premier axe de pivotement D1, ou bien les orienter obliquement, à la surface d'un cône ou d'un cylindre de révolution autour du premier axe de pivotement D1, par rapport à ce dernier. L'obtention de lignes de champ en hélice, ou encore en cône, permet de faire varier la dissipation d'énergie, et d'ajuster au mieux la régulation. Et notamment cette disposition peut permettre un déploiement supérieur des masselottes 4. La courbe de la figure 20 illustre l'évolution des pertes par courants de Foucault, dans une position complètement déployée des masselottes, toutes choses égales par ailleurs, en fonction du décalage angulaire du premier flasque 16 par rapport au second flasque 17.

Dans une autre réalisation particulière, le premier flasque 16 et le second flasque 17 sont mobiles en translation ou/et en pivotement l'un par rapport à l'autre selon la direction du premier axe de pivotement D1 de façon à modifier la valeur de leur entrefer.

Dans une autre réalisation particulière, le premier flasque 16 et le second flasque 17 sont mobiles en translation ou/et en pivotement l'un par rapport à l'autre selon la direction du premier axe de pivotement D1, sous l'effet de la pénétration de la partie périphérique 30 de la masselotte 4 dans leur entrefer, par exemple avec une partie biconique ou en coin de cette partie périphérique tendant à écarter ces flasques, notamment à l'encontre d'un ressort qui les rappelle l'un vers l'autre jusqu'à une position de butée.

Dans une autre réalisation particulière, le premier flasque 16 et le second flasque 17 sont en pivotement l'un par rapport à l'autre selon la direction du premier axe de pivotement D1, sous l'effet de la pénétration de la partie périphérique 30 de la masselotte 4 dans leur entrefer, qui va par exemple tendre à faire pivoter l'un des flasques mobile par rapport à l'autre maintenu fixe.

Dans une autre réalisation particulière, le premier flasque 16 et le second flasque 17 sont mobiles en translation l'un par rapport à l'autre selon la direction du premier axe de pivotement D1, ou bien en pivotement l'un par rapport à l'autre selon la direction du premier axe de pivotement D1, sous l'action d'un barillet constituant la source d'énergie, pour compenser la perte énergétique du barillet de sonnerie, de façon similaire à un mécanisme de réserve de marche.

Ces mobilités relatives des flasques porteurs, selon le cas, d'aimants tel qu'exposé ci-dessus, ou bien d'éléments conducteurs quand ce sont les masselottes 4 qui portent des aimants, par pivotement ou/et translation, permettent en particulier d'ajuster le tempo, dans le cas de l'application à un mécanisme de sonnerie, telle que représentée sur les figures.

Dans une réalisation particulière non représentée sur les figures, les aimants permanents 12 sont montés mobiles radialement par rapport au premier axe de pivotement D1. Ainsi, si la nappe de champ, sensiblement cylindrique autour du premier axe de pivotement D1, s'éloigne de ce dernier au fur et à mesure que la vitesse de pivotement du mobile 3 augmente, le couple de freinage est encore augmenté en cas d'augmentation de la vitesse de pivotement du mobile 3. De façon avantageuse, le régulateur 1 comporte des moyens agencés pour autoriser un mouvement radial des aimants permanents 12 ou/et de la chambre 8 par rapport au premier axe de pivotement D1 en fonction de la vitesse de pivotement du mobile 3, par exemple par une utilisation de la force centrifuge, ou bien en utilisant une motorisation électrique alimentée par des courants de Foucault induits.

Dans une réalisation particulière non représentée sur les figures, le régulateur 1 comporte des moyens agencés pour autoriser un mouvement de révolution des aimants permanents 12 ou/et de la chambre 8 autour du premier axe de pivotement D1 en fonction de la vitesse de pivotement du mobile 3. Dans une réalisation avantageuse, ce mouvement de révolution se fait en sens contraire du sens de pivotement du mobile 3, de façon à doubler le courant induit, et donc le freinage associé.

Dans une réalisation particulière, on peut améliorer encore la dissipation d'énergie en motorisant axialement les flasques ou les culasses porteuses d'aimants permanents. Notamment, l'emploi d'un différentiel permet de faire pivoter simultanément les masselottes 4 et les aimants permanents 12, dans des sens opposés, ce qui permet d'envisager la même dissipation et la même régulation en utilisant des vitesses de rotation plus faibles, ce qui est favorable au niveau de l'usure. Ou bien, en gardant la même vitesse, de doubler la dissipation par courants de Foucault, si le différentiel est par exemple construit de façon à ce les vitesses respectives des aimants et des masselottes soient égales et de sens opposé.

De préférence, au moins une masselotte 4, et avantageusement chaque masselotte 4, est réalisée en matériau électriquement conducteur ou en or, ou en cuivre ou en argent, ou comporte, dans la partie soumise au champ magnétique dans la chambre 8, une partie réalisée en matériau électriquement conducteur ou en or, ou en argent ou en cuivre, sur toute son épaisseur traversée par le champ magnétique selon une direction parallèle au premier axe de pivotement D1.

Dans un agencement particulier, tel que visible sur la figure 10, le régulateur 1 comporte une pluralité de mobiles 3 solidaires les uns des autres en pivotement et étagés selon la direction du premier axe de pivotement D1, et chacun porteur d'au moins une masselotte 4 mobile dans une chambre 8 séparée ou commune aux autres masselottes 4. Cette disposition peut se révéler avantageuse si l'encombrement horizontal au sein du mouvement de la pièce d'horlogerie est limité.

Dans une réalisation particulière, représentée sur la figure 1, du régulateur de mobile horloger ou de mobile de sonnerie 1, au moins une partie de la portion périphérique 30 du mobile 3 est mobile, non pas dans une chambre, mais dans une fente 21 entre deux pôles magnétiques 22; 23 de polarités opposées que comporte un aimant permanent ou un électro-aimant, la fente 21 définissant un plan orthogonal au premier axe de pivotement D1. Une régulation peut être faite par un électro-aimant 24 appliqué sur une face du mobile 3 à proximité de sa périphérie, cet électro-aimant 24 étant alimenté par le courant induit par le pivotement du mobile 3. De préférence, ce régulateur 1 comporte alors un cadre formant boucle magnétique, par exemple en acier ou en fer, et un circuit magnétique autour de la fente 21 qui est ménagée dans ce cadre. De part et d'autre du plan de la fente 21, le circuit magnétique présente des pôles de polarités opposées. Les pôles du circuit magnétique sont disposés au voisinage de la périphérie du rotor mobile 3. Ce dernier, ou bien constitue le mobile de sonnerie rotatif, ou bien est couplé avec lui, directement ou par l'intermédiaire d'un rouage ou d'une autre transmission directe. Le pivotement du mobile de sonnerie sous l'action de la source d'énergie entraîne le pivotement du rotor, et donc un champ magnétique variable dans l'entrefer des pôles. Ce champ magnétique variable crée un courant électrique induit également variable dans un rotor en matière électriquement conductrice ou magnétique.

Ce courant électrique peut être utilisé pour l'entraînement d'un moteur, dont l'arbre est couplé, directement ou indirectement, au rotor, de façon, selon le type de montage, à entraîner ou à freiner celui-ci. Il peut aussi être utilisé pour actionner un électro-aimant, ou bien appliqué sur une face du rotor à proximité de sa périphérie de façon à freiner son pivotement en vertu de la Loi de Laplace, ou bien actionnant un dispositif de freinage du mobile de sonnerie.

De façon préférée, pour avoir le moindre encombrement possible en même temps que le plus faible nombre de composants, le rotor et le mobile de sonnerie constituent un ensemble monobloc après assemblage, le cadre comporte de part et d'autre de sa fente des aimants permanents de polarités opposées et la régulation est faite par un électro-aimant appliqué sur une face du rotor à proximité de sa périphérie, alimenté par le courant induit par le pivotement du rotor.

Le freinage par les forces de Laplace et l'électro-aimant est sensiblement proportionnel à la vitesse de pivotement du rotor. En cas d'emballement du mécanisme de sonnerie, le différentiel de vitesse se traduit par un différentiel de freinage, qui ramène la vitesse de pivotement du rotor, et donc du mobile de sonnerie, à une valeur de consigne, ce qui permet, non seulement de contrer les effets d'un emballement mécanique, mais aussi de réguler la vitesse de pivotement du mobile de sonnerie, et ainsi de rendre la séquence musicale ou de sonnerie parfaitement rythmée, et agréable pour l'utilisateur.

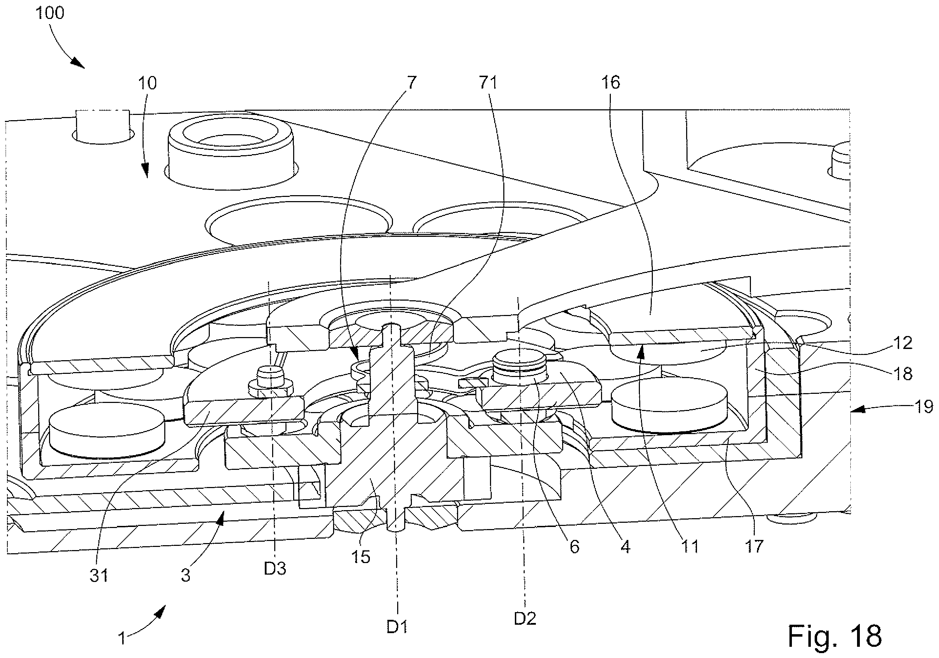

Une réalisation simplifiée, telle que visible sur la figure 18, comprend les éléments suivants:

- deux flasques de culasse ferromagnétiques de diamètre 13 mm en « Mumetal » avec 12 aimants permanents en « Recoma25 » montés en magnétisation axiale alternée, diamètre 1.7mm, épaisseur. 0.25mm ;
- deux masselottes en cuivre, diamètre intérieur 2mm, diamètre extérieur 5.6mm, épaisseur 0.9mm ;
- un support de masselottes en laiton, de diamètre 6 mm, avec goupilles laiton chassées comme pivots de masselottes;
- un anneau de culasse sous forme d'un tube externe de longueur 2,5 mm en acier « CK45 » pour assurer la continuité du flux magnétique induit par les aimants permanents; cet anneau de culasse effectue ainsi un blindage ;
- deux goupilles chassées dans les masselottes pour fixation du ressort de rappel;
- deux ressorts de rappel de type o-ring caoutchouc liant l'axe aux goupilles de fixation respectives.

Cette version simplifiée avec des ressorts de rappel sans dimensionnement particulier a néanmoins un fonctionnement stable au niveau de l'auto-régulation de vitesse du système.

Il est important de préciser que la symétrie au niveau des masselottes et des ressorts de rappel est d'une grande importance pour éviter les balourds et les oscillations. En effet, les masselottes pourraient s'excentrer avec des déplacements angulaires différents par manque de symétrie et dans le pire des cas, à n'avoir qu'une seule masselotte en déplacement angulaire. De plus, les ressorts sont couplés avec l'axe central. Cette solution, en opposition avec un seul ressort liant les deux masselottes sans liaison avec l'axe central, permet d'éviter toute dissymétrie et empêche les deux masselottes d'osciller autour de l'axe central.

Une version particulière, plus élaborée et apte à remplir les conditions de régulation que se propose d'assurer l'invention, illustrée par la figure 18, comprend quant à elle :

- deux flasques de culasse ferromagnétiques statoriques en matériau FeCo « AFK502 ». Chaque flasque de culasse porte 14 aimants permanents, diamètre 1.3 mm, épaisseur 0.25mm, de type NdFeB « VACODYM 655 HR » en magnétisation axiale alternée;

- deux masselottes sont choisies en argent pour sa conductivité électrique très faible;

- l'entrefer magnétique, c'est-à-dire la distance axiale entre les deux couches d'aimants, est réduit afin d'augmenter l'induction dans l'entrefer au niveau des masselottes. L'épaisseur des masselottes est de 0.3 mm et l'entrefer mécanique entre aimants et masselottes est de 0.12 mm;

- les dimensions du dispositif sont adaptées à l'encombrement dans une montre musicale, et le diamètre extérieur est limité à 8.4 mm et la hauteur à 1.35 mm;

- le ressort est dimensionné afin d'équilibrer la force centrifuge pour toute position angulaire de masselotte à une vitesse de 3100 tr/mn.

Les résultats sont conformes aux attentes : variation de vitesse faible, inférieure à 3% de la vitesse nominale, et dissipation de puissance élevée, supérieure à 6mW.

La courbe de la figure 19 illustre l'évolution des pertes par courants de Foucault en fonction de la position angulaire des masselottes sur leur pivot respectif, dans cette réalisation préférée.

On peut voir que lorsque les masselottes sont serrées, la puissance dissipée par courants de Foucault est nulle. Ainsi, le système ne freine pas en dessous de la vitesse nominale.

Les caractéristiques du ressort de rappel sont déterminées en équilibrant la force centrifuge, agissant sur la masselotte à vitesse nominale, au point de fixation ressort. Ainsi, la rigidité du ressort nécessaire et la précharge du ressort valent respectivement 0.0014 N/mm et 0.006 N dans ce cas d'espèce.

On peut également déterminer la position radiale de l'extrémité du ressort au repos et la distance de précharge qui valent respectivement 0.93 mm et 0.44mm. Précisons encore que le ressort est tenu par l'axe central mais libre de tourner. Ainsi, la force de rappel du ressort est toujours dirigée vers le centre de rotation du système.

La figure 20 montre la puissance dissipée pour une vitesse nominale de 3100 tr/min avec les masselottes complètement déployées en fonction du décalage angulaire des aimants de la culasse supérieure. Ce décalage angulaire correspond à un déphasage magnétique entre aimants de la culasse supérieure et aimants de la culasse inférieure. On peut remarquer que la variation de puissance maximale dissipée varie fortement en fonction du déphasage, jusqu'à 90° magnétique. Ce comportement permet un réglage fin de l'intervalle de vitesse de régulation en admettant un ressort un peu plus rigide que celui nécessaire pour équilibrer la force centrifuge à vitesse nominale. On peut ainsi faire varier le comportement de la puissance dissipée par courants de Foucault en fonction de la position angulaire des masselottes sur leur pivot respectif. Ainsi, pour une même puissance dissipée, en déphasant les aimants supérieurs par rapport aux aimants inférieurs, les masselottes doivent s'excentrer davantage. Avec un ressort adéquat, la vitesse doit augmenter pour que les masselottes atteignent leurs positions angulaires permettant de dissiper la puissance nécessaire.

Les perturbations magnétiques au niveau du spiral d'une pièce d'horlogerie, induites par un tel régulateur, sont inférieures à 1 nT.

La température agit sur le comportement du dispositif à travers trois éléments: les aimants, les masselottes et les ressorts. Elle influence l'induction rémanente des aimants et la résistivité des masselottes. Ainsi, lorsque la température augmente, les masselottes doivent s'excentrer un peu plus pour atteindre la dissipation de puissance nécessaire. Si la rigidité de la relation entre couple de freinage par courants de Foucault et vitesse de rotation est très élevée, l'influence de la température sur la vitesse de régulation à travers aimants et masselottes est négligeable. Concernant le ressort, des matériaux de type « Elinvar » peuvent être avantageusement utilisés afin de réduire l'influence de la température sur son module d'élasticité, et ainsi réduire l'influence de la température sur la rigidité et la précharge du ressort.

Dans un autre mode de réalisation de l'invention qui ne fait pas appel aux courants de Foucault, le mobile 3 comporte des masselottes 4 montées pivotantes, de façon similaire, et rappelées vers le premier axe de pivotement D1 des moyens de compensation de force centrifuge constitués par les moyens de rappel 7, en l'occurrence un ou plusieurs ressorts 71, selon les caractéristiques énoncées plus haut. Le dispositif 1 comporte alors, en complément de cette structure, des moyens de freinage qui interviennent quand la partie périphérique 30 des masselottes 4 passe du premier volume VI au second volume VE de la figure 14, lequel ne comporte alors plus nécessairement de champ magnétique 8.

Ces moyens de freinage peuvent être constitués, ou bien de moyens de freinage dans l'air, par l'exemple par le déploiement d'un aéro-frein à partir de la vitesse de consigne ωc, ou bien de moyens de freinage sec, par exemple par friction de la partie périphérique 30 des masselottes 4, avec une surface leur opposant un couple de freinage. De façon particulière, cette surface est agencée de façon à ce que le couple de freinage appliqué croisse avec le rayon à partir du premier axe de pivotement D1, par exemple avec une rugosité croissant avec sa distance à ce premier axe de pivotement D1.

Là encore, de façon préférée, le centre d'inertie de chaque masselotte 4 est plus éloigné du premier axe de pivotement D1 que ne l'est le pivot primaire 6 de la masselotte 4 concernée.

De façon préférée, le pivot secondaire 72 de chaque masselotte 4 est plus éloigné du premier axe de pivotement D1 que ne l'est le pivot primaire 6 de la masselotte 4 concernée.

Naturellement ce mode de réalisation purement mécanique peut aussi être combiné avec le mode de freinage par courants de Foucault.

Le régulateur 1 selon l'invention peut fonctionner dans deux sens de pivotement opposés, références A et B sur la figure 13. Le sens de fonctionnement produit des effets différents, dans la mesure où les résultantes des forces appliquées au système sont différentes.

Si l'on reprend l'exemple de réalisation illustré sur les figures, et où le second volume VE est extérieur au premier volume VI, et où les masselottes 4 sont au moins partiellement conductrices, et où un champ magnétique est présent dans la chambre 8, lors d'un pivotement dans le sens A, les masselottes 4 s'écartent facilement, et entrent dans la région du champ magnétique variable, permettant ainsi la dissipation d'énergie par courants de Foucault.

Dans le sens de pivotement contraire B, lors d'un régime transitoire au début de leur rotation, les masselottes 4 sont retenues, par une force due à l'accélération, du fait de la rotation induite des masselottes autour de leur point de pivotement, lequel n'est pas confondu avec leur centre d'inertie, et qui s'ajoute à l'effort de rappel des ressorts préarmés 71, et qui s'oppose à la force centrifuge. De ce fait les masselottes s'éloignent plus difficilement de l'axe de pivotement D1 du mobile 3, et rentrent moins vite dans la région du champ magnétique. Cet effet dynamique s'oppose donc à la force centrifuge, contrairement au pivotement du mobile 3 dans le sens A, où les forces s'ajoutent.

Le dimensionnement du système doit tenir compte des fuites du champ magnétique, en particulier au niveau de la partie axiale du régulateur 1. Ces fuites créent une force d'origine magnétique, qui tend à écarter les masselottes de l'axe D1 si le régulateur 1 pivote dans le sens A, et à les rapprocher de cet axe D1 dans le cas contraire. L'intensité de cette force croît avec la vitesse de pivotement, et cette force est loin d'être négligeable dans le bilan des forces à grande vitesse de rotation, notamment aux environs de 3000 trs/minute.

Signalons encore un effet aérodynamique, connu des anciens régulateurs à masselottes à freinage par air, qui, quoique faible, ne doit pas être négligé non plus dans le calcul des aimants, des masselottes.

Le bon dimensionnement des ressorts et de leur précontrainte conditionne la qualité de la phase transitoire d'accélération du mobile.

Dans une variante de l'invention non illustrée par les figures, on utilise ces efforts de type dynamique, ou/et liés aux fuites du champ magnétique, pour autoriser une modification de la forme des masselottes lors du fonctionnement, ce qui élargit encore le champ des possibilités de régulation possibles.

Dans une autre variante de l'invention, le régulateur 1 ne comporte pas de moyens de rappel 7, ressorts 71 ou similaires, et il est calculé de façon à ce que la force centrifuge sur la masselotte compense la force due aux courants de Foucault.

Dans une autre variante encore, une partie des masselottes 4 peut être maintenue en permanence dans l'entrefer au niveau de la chambre 8, de façon à ce que, dès le début du pivotement du mobile 3, des courants de Foucault s'établissent et entrent dans le bilan des forces appliquées aux masselottes 4, et donc indirectement au mobile 3.

En somme, l'invention procure les conditions d'une très bonne régulation de vitesse, en dissipant beaucoup d'énergie, avec un mécanisme simple et très fiable.

Et il est encore possible, selon le dimensionnement adopté, de concevoir un système selon le principe de l'invention, mais consommant, à l'inverse, peu d'énergie, et pour lequel l'effet de régulation dominant est la force nette produite par les courants de Foucault.

Il est ainsi possible, ce qui peut être avantageux, de disposer, avec un seul mécanisme, d'au moins deux possibilités de régulation avec des caractéristiques différentes, selon le sens de pivotement choisi.

Dans une variante particulière de l'invention, la dissipation d'énergie se fait dans un milieu liquide, notamment dans un milieu visqueux.

Le régulateur 1 selon l'invention peut ainsi fonctionner dans un liquide tel qu'une huile, puisque la réalisation de liaisons mécaniques étanches sans frottement entre différents milieux secs et lubrifiés est possible. Il est en effet particulièrement avantageux de cumuler l'effet d'un champ magnétique variable aux effets résultant des phénomènes hydrodynamiques.

L'invention concerne encore un mécanisme musical ou de sonnerie 10 pour pièce d'horlogerie ou boîte à musique, comportant une source d'énergie ou un barillet, et des moyens 2 de transmission de couple mécanique depuis la source d'énergie ou le barillet vers un mobile de génération de musique ou de sonnerie, et où les moyens de transmission 2 entraînent au moins un mobile 3 que comporte un régulateur de mobile horloger ou de mobile de sonnerie 1 selon l'invention.

L'invention concerne encore une pièce d'horlogerie ou boîte à musique comportant un mobile de génération de musique ou de sonnerie, et qui comporte un tel mécanisme musical ou de sonnerie 10, ou/et un tel régulateur de mobile horloger ou de mobile de sonnerie 1.

Dans une réalisation particulière, cette pièce d'horlogerie est une montre musicale.

L'invention concerne encore un régulateur à inertie, de composition identique au régulateur de mobile horloger ou de mobile de sonnerie décrit ci-dessus, pour d'autres applications que la régulation de sonnerie ou de musique, par exemple, dans le domaine horloger, pour la régulation de mouvement, ou, dans d'autres domaines que celui de l'horlogerie, pour la régulation en vitesse de tout mécanisme entraîné en pivotement par une source d'énergie délivrant un couple variable, et plus généralement de tout système de mesure et/ou d'affichage du temps. On citera notamment les mécanismes de chronographe, de chronomètre, de régulation de vitesse de déplacement d'une bascule, par exemple dans un mécanisme de quantième instantané, les mécanismes d'automate avec possibilité de varier les vitesses entre des mouvements distincts, les mécanismes de réveil, de grande sonnerie, de carillon, de répétition minute, de boîtes à musique et similaires, à picot ou à vent, ou encore des mécanismes de centrales à inertie mécanique, cette liste n'étant nullement limitative.

L'invention concerne encore un ressort du type du ressort 71 décrit ci-dessus, en tant que tel, pour d'autres applications que celle décrite ici, et en particulier pour un régulateur à inertie.

En somme, l'invention propose l'utilisation préférentielle d'un régulateur magnétique pour la régulation d'un mécanisme de sonnerie.

L'application d'un régulateur magnétique pour un mécanisme de sonnerie est nouvelle. A l'inverse de régulateurs connus pour des mécanismes de commande, donc de circuits émetteurs destinés à assurer une fréquence déterminée à un mécanisme horloger, selon l'invention, le régulateur magnétique se comporte en récepteur, et consomme de l'énergie. Il asservit la vitesse en rotation d'un mobile de sonnerie rotatif, en particulier d'une roue de sonnerie, à une valeur de consigne, en l'abaissant, si elle est supérieure à cette valeur de consigne, et transforme l'énergie cinétique excédentaire en énergie stockée et/ou consommée.

Un régulateur magnétique comporte nécessairement des aimants ou/et des électroaimants, ce qui peut conduire à utiliser préférentiellement certains matériaux, moins sensibles aux champs magnétiques, pour éviter des effets parasites. En particulier, l'utilisation d'un balancier en silicium est ici préférée. C'est aussi pourquoi est préférée la version particulière d'une chambre 8 délimitée par un écran d'isolation magnétique 9 en matériau a magnétique, réalisant un blindage magnétique, qui permet d'occasionner le moins de perturbation à l'environnement de la pièce d'horlogerie, et ne perturbe pas le fonctionnement du mouvement. La forme de chambre 8 annulaire, avec des orifices restreints au passage de l'arbre 15 du mobile 9, est également réalisée dans ce but.

La conception du régulateur selon l'invention se fait avantageusement sur des principes de construction proches des régulateurs connus : vitesse de pivotement proche et pouvoir de freinage équivalent, mais ce nouveau régulateur n'a pas les inconvénients de ceux de l'état de la technique.

L'utilisation d'un tel régulateur magnétique permet de disposer d'un mécanisme silencieux, et à vitesse extrêmement précise. En effet, le frein de Foucault variable réalisé par l'invention est suffisant pour stabiliser la vitesse de pivotement du mobile 3, et sans contact, il ne fait donc pas de bruit, ou très peu de bruit.

L'invention permet à l'horloger de régler le couple de freinage, si par exemple la chambre 8 du premier mode est conçue de façon à ce que les surfaces 13 et 14 soient réglables en distance l'une part rapport à l'autre, par exemple avec une réalisation emboîtée, ou mieux vissée, de l'un ou/et l'autre flasques de culasse 16, 17, sur l'anneau de culasse 18, ou bien, dans le deuxième mode, si l'entrefer de la fente 21 entre les pôles magnétiques 22 et 23 est prévu réglable.

La répétitivité de la vitesse régulée lors de l'assemblage est de loin bien meilleure que dans les systèmes existants.

La stabilité de la vitesse en vieillissement est grandement fiabilisée par la suppression des frottements et des chocs.

La régulation de la vitesse du mobile 3 est assurée de façon satisfaisante, même si le couple du barillet vient à varier de la moitié lors de son désarmage.

Les éléments clés d'un tel régulateur sont d'une part, le ressort de rappel de masselottes qui détermine la vitesse de régulation et, d'autre part, les aimants permanents et les masselottes électriquement conductrices qui caractérisent la puissance dissipée et par déduction, le couple de freinage.

Un tel régulateur est parfaitement fiable, ce qui est essentiel pour produit horloger.

Ce dispositif à masselottes excentriques est un concept novateur qui permet de caractériser la rigidité de la relation entre couple de freinage et vitesse de régulation et découple le système de rotation du frein magnétique pour des vitesses inférieures à la vitesse nominale.

En somme, les avantages apportés par l'invention sont nombreux :

- vitesse de pivotement très précise, notamment régulée à moins de 3%;
- silence de fonctionnement ;
- fiabilité par absence d'usure ;
- réglage facile lors de l'assemblage ;
- aucune incertitude lors du développement quant à la définition de l'amplitude/vitesse ;
- grande plage de fonctionnement de couple pour une vitesse équivalente.

**Revendications**

**1.** Régulateur de mobile horloger ou de mobile de sonnerie (1), pour la régulation, autour d'une valeur de vitesse de consigne (ωc), de la vitesse de pivotement (w) d'un mobile (3) autour d'un premier axe de pivotement (D1), ledit mobile (3) étant agencé pour être entraîné, par l'intermédiaire de moyens de transmission (2), par une source d'énergie délivrant un couple mécanique, ledit mobile (3) comportant au moins une masselotte (4) montée pivotante autour d'un pivot primaire (6) définissant un deuxième axe de pivotement (D2) parallèle audit premier axe de pivotement (D1) et distant de lui, ledit régulateur (1) comportant des moyens de rappel (7) de ladite au moins une masselotte (4) vers ledit premier axe de pivotement (D1), et ladite au moins une masselotte (4) étant agencée de façon à ce que, d'une part quand ledit mobile (3) pivote à une vitesse inférieure ou égale à ladite vitesse de consigne (wc), ladite au moins une masselotte (4) reste confinée dans un premier volume (VI) de révolution autour dudit premier axe de pivotement (D1), et d'autre part à ce que, quand ledit mobile (3) pivote à une vitesse supérieure à ladite vitesse de consigne (ωc), ladite au moins une masselotte (4) s'engage, au moins au niveau d'une portion périphérique (30) qu'elle comporte, dans un second volume (VE) de révolution autour dudit premier axe de pivotement (D1) contigu audit premier volume de révolution (VI), et ladite portion périphérique (30) coopérant dans ledit second volume de révolution (VE) avec des moyens de régulation agencés pour provoquer le freinage dudit mobile (3) et ramener sa vitesse de pivotement (w) à ladite vitesse de consigne (wc), et pour dissiper l'énergie excédentaire, **caractérisé en ce que** ou bien ladite portion périphérique (30) est électriquement conductrice et lesdits moyens de régulation sont constitués par des moyens de génération d'au moins un champ magnétique variable dans une chambre (8) délimitée au moins partiellement par des parties aimantées, ledit champ magnétique variable comportant des lignes de champ orientées de façon à ce que l'interaction entre ladite portion périphérique (30) et ledit champ magnétique génère des courants de Foucault tendant à freiner ledit mobile en s'opposant à son pivotement, ou bien **en ce que** ladite portion périphérique (30) est réalisée en matériau aimanté, et que le mouvement de pivotement dudit mobile (3) et de ladite masselotte (4) crée un champ magnétique variable, ou alterné, ou sinusoïdal, dans une chambre (8) délimitée au moins partiellement par des parties conductrices, dont l'interaction avec ledit champ magnétique génère des courants de Foucault tendant à freiner ledit mobile en s'opposant à son pivotement.

2. Régulateur de mobile horloger ou de mobile de sonnerie (1) selon la revendication 1, **caractérisé en ce que** ledit second volume (VE) de révolution autour dudit premier axe de pivotement (D1) est contigu et extérieur audit premier volume de révolution (VI).

3. Régulateur de mobile horloger ou de mobile de sonnerie (1) selon la revendication 1, **caractérisé en ce que** ledit second volume (VE) de révolution autour dudit premier axe de pivotement (D1) contigu et intérieur audit premier volume de révolution (VI).

4. Régulateur de mobile horloger ou de mobile de sonnerie (1) selon l'une des revendications précédentes, **caractérisé en ce qu'**il comporte des moyens de freinage qui interviennent quand ladite partie périphérique (30) des masselottes (4) passe dudit premier volume (VI) audit second volume (VE), pour opposer un couple de freinage à la partie périphérique (30) desdites masselottes (4) de façon à ce que le couple de freinage appliqué croisse avec la position radiale de chaque dite masselotte à partir du premier axe de pivotement (D1) au sein dudit second volume (VE).

5. Régulateur de mobile horloger ou de mobile de sonnerie (1) selon l'une des revendications précédentes, **caractérisé en ce que** ladite chambre (8) est délimitée par un écran d'isolation magnétique (9) en matériau a magnétique réalisant un blindage magnétique.

6. Régulateur de mobile horloger ou de mobile de sonnerie (1) selon l'une des revendications précédentes, **caractérisé en ce que** lesdits moyens de rappel (7) sont agencés de façon à, quand ledit mobile (3) pivote à une vitesse inférieure ou égale à ladite vitesse de consigne (ωc), maintenir ladite au moins une masselotte (4) confinée dans ledit premier volume de révolution (VI), et d'autre part à, quand ledit mobile (3) pivote à une vitesse supérieure à ladite vitesse de consigne (ωc), autoriser ladite au moins une masselotte (4) à s'engager, au moins au niveau d'une portion périphérique (30) qu'elle comporte, dans ledit second volume de révolution (VE).

7. Régulateur de mobile horloger ou de mobile de sonnerie (1) selon l'une des revendications précédentes, **caractérisé en ce que** lesdits moyens de rappel (7) sont des moyens de rappel élastique, et exercent un effort de rappel, dans la direction dudit premier axe de pivotement (D1), sur un pivot secondaire (72) que comporte ladite au moins une masselotte (4) et définissant un troisième axe de pivotement (D3) parallèle auxdits premier axe de pivotement (D1) et deuxième axe de pivotement (D2), et **en ce que** lesdits moyens de rappel (7) comportent un premier guidage en pivotement (74) autour d'un pivot principal (15) ou arbre que comporte ledit mobile (3) autour dudit premier axe de pivotement (D1), et qui comportent au moins un second guidage en pivotement (73) autour dudit pivot secondaire (72) que comporte ladite au moins une masselotte (4) autour dudit troisième axe de pivotement (D3).

8.  Régulateur de mobile horloger ou de mobile de sonnerie (1) selon l'une des revendications 1 à 6, **caractérisé en ce que** ledit mobile (3) comporte une pluralité de dites masselottes (4) réparties équidistantes autour dudit premier axe de pivotement (D1), et **en ce que** lesdits moyens de rappel élastique (7) comportent un premier guidage en pivotement (74) autour d'un pivot principal (15) ou arbre que comporte ledit mobile (3) autour dudit premier axe de pivotement (D1), et comportent un second guidage en pivotement (73) autour d'un pivot secondaire (72) que comporte chaque dite masselotte (4) autour d'un troisième axe de pivotement (D3) propre à celle-ci.

9.  Régulateur de mobile horloger ou de mobile de sonnerie (1) selon la revendication 7, **caractérisé en ce que** lesdits moyens de rappel élastique (7) sont constitués par au moins un ressort (71) qui est monté précontraint, d'une valeur correspondant à une course radiale (CP) de son dit second guidage en pivotement (73), selon une direction radiale par rapport audit premier axe de pivotement (D1), quand ledit ressort (71) est guidé par son dit premier guidage (74) sur ledit pivot principal (15), entre une position à vide dudit ressort (71) et une position d'accrochage dudit ressort sur ledit pivot secondaire (72) de ladite masselotte (4), ledit mobile (3) et ladite masselotte (4) étant en position d'arrêt, ladite précontrainte tendant, en position d'accrochage dudit ressort (71), à tirer radialement ledit pivot secondaire (72) de ladite masselotte (4) vers ledit premier axe de pivotement (D1).

10. Régulateur de mobile horloger ou de mobile de sonnerie (1) selon l'une des revendications précédentes, **caractérisé en ce que**, quand lesdits moyens de régulation sont constitués desdits moyens de génération d'au moins un champ magnétique variable, ceux-ci sont constitués par des aimants permanents (12), qui sont disposés de part et d'autre d'une chambre (8) dans laquelle est destinée à évoluer ladite partie périphérique (30) de ladite au moins une masselotte (4), lesdits aimants permanents (12) étant disposés à la périphérie intérieure d'une culasse (19) entourant ladite chambre (8).

11. Régulateur de mobile horloger ou de mobile de sonnerie (1) selon la revendication précédente, **caractérisé en ce que** ladite culasse (19) comporte, de part et d'autre de ladite chambre (8), un premier flasque (16) porteur d'une première série de dits aimants permanents (12), et un second flasque (17) porteur d'une seconde série de dits aimants permanents (12), et lesdits premier flasque (16) et second flasque (17) étant mobiles en pivotement l'un par rapport à l'autre autour dudit premier axe de pivotement (D1), de façon à, selon leur position relative, aligner lesdites lignes de champ parallèlement audit premier axe de pivotement (D1), ou bien les orienter obliquement, à la surface d'un cône ou d'un cylindre de révolution autour dudit premier axe de pivotement (D1), par rapport à ce dernier.

12. Régulateur de mobile horloger ou de mobile de sonnerie (1) selon la revendication 10, **caractérisé en ce que** ladite culasse (19) comporte, de part et d'autre de ladite chambre (8), un premier flasque (16) porteur d'une première série de dits aimants permanents (12), et un second flasque (17) porteur d'une seconde série de dits aimants permanents (12), et lesdits premiers flasque (16) et second flasque (17) étant mobiles en translation l'un par rapport à l'autre selon la direction dudit premier axe de pivotement (D1) de façon à modifier la valeur de leur entrefer.

13. Régulateur de mobile horloger ou de mobile de sonnerie (1) selon la revendication 10, **caractérisé en ce que** ladite culasse (19) comporte, de part et d'autre de ladite chambre (8), un premier flasque (16) porteur d'une première série de dits aimants permanents (12), et un second flasque (17) porteur d'une seconde série de dits aimants permanents (12), et lesdits premiers flasque (16) et second flasque (17) étant mobiles en translation ou/et en pivotement l'un par rapport à l'autre selon la direction dudit premier axe de pivotement (D1), sous l'effet de la pénétration de ladite partie périphérique (30) de ladite au moins une masselotte (4) dans leur entrefer.

14. Régulateur de mobile horloger ou de mobile de sonnerie (1) selon la revendication 10, **caractérisé en ce que** ladite culasse (19) comporte, de part et d'autre de ladite chambre (8), un premier flasque (16) porteur d'une première série de dits aimants permanents (12), et un second flasque (17) porteur d'une seconde série de dits aimants permanents (12), et lesdits premiers flasque (16) et second flasque (17) étant mobiles en translation ou/et en pivotement l'un par rapport à l'autre selon la direction dudit premier axe de pivotement (D1), sous l'action d'un barillet constituant ladite source d'énergie.

15. Régulateur de mobile horloger ou de mobile de sonnerie (1) selon l'une des revendications 10 à 14, **caractérisé en ce que** lesdits aimants permanents (12) sont montés mobiles radialement par rapport audit premier axe de pivotement (D1).

16. Régulateur de mobile horloger ou de mobile de sonnerie (1) selon la revendication 9, **caractérisé en ce que** ledit ressort (71) est agencé pour exercer un effort de vers le premier axe de pivotement (D1).

17. Régulateur de mobile horloger ou de mobile de sonnerie (1) selon la revendication précédente, **caractérisé en ce que** la rigidité dudit ressort (71) est définie de façon à ce que la valeur de la force radiale appliquée à ladite masselotte (4), au-delà de la course de précontrainte (CP) du ressort (71), soit une fonction sensiblement affine de la position angulaire ($\alpha$) de ladite masselotte (4) autour dudit pivot primaire (6) sur ledit deuxième axe de pivotement (D2), par rapport à la position à l'arrêt de ladite masselotte (4), et pour laquelle une valeur nulle de ladite force radiale correspond, en valeur absolue, à ladite course de précontrainte.

18. Régulateur de mobile horloger ou de mobile de sonnerie (1) selon la revendication 9, **caractérisé en ce que** ledit ressort (71) est réalisé en silicium, ou quartz ou un de leurs composés, ou en un matériau au moins partiellement amorphe.

19. Mécanisme musical ou de sonnerie pour pièce d'horlogerie ou boîte à musique, comportant une source d'énergie ou un barillet, et des moyens de transmission (2) de couple mécanique depuis ladite source d'énergie ou ledit barillet vers un mobile de génération de musique ou de sonnerie, **caractérisé en ce que** lesdits moyens de transmission (2) entraînent au moins un dit mobile (3) que comporte un régulateur de mobile horloger ou de mobile de sonnerie (1) selon l'une des revendications précédentes.

20. Pièce d'horlogerie ou boîte à musique comportant un mobile de génération de musique ou de sonnerie, **caractérisée en ce qu'**elle comporte un mécanisme musical ou de sonnerie selon la revendication précédente, ou/et un régulateur de mobile horloger ou de mobile de sonnerie (1) selon l'une des revendications 1 à 18.

**Patentansprüche**

1. Regler (1) für ein Uhrendrehteil oder ein Läutwerkdrehteil für die Regulierung der Drehgeschwindigkeit ($\omega$) eines Drehteils (3) um eine erste Drehachse (D1) um einen Sollgeschwindigkeitswert ($\omega$c) herum, wobei das Drehteil (3) dafür ausgelegt ist, durch eine Energiequelle, die ein mechanisches Drehmoment liefert, über Kraftübertragungsmittel (2) angetrieben zu werden, wobei das Drehteil (3) mindestens ein Fliehgewicht (4) aufweist, das drehbar um einen primären Drehzapfen (6) angeordnet ist, der eine zweite Drehachse (D2) parallel zu der ersten Drehachse (D1) definiert und hiervon beabstandet ist, wobei der Regler (1) Mittel (7) zum Rückstellen des mindestens einen Fliehgewichts (4) zu der ersten Drehachse (D1) aufweist und das mindestens eine Fliehgewicht (4) dafür ausgelegt ist, dass einerseits dann, wenn sich das Drehteil (3) mit einer Geschwindigkeit kleiner oder gleich der Sollgeschwindigkeit ($\omega$c) dreht, das mindestens eine Fliehgewicht (4) in einem ersten rotationssymmetrischen Volumen (VI) um die erste Drehachse (D1) eingeschlossen bleibt, und dass andererseits dann, wenn sich das Drehteil (3) mit einer Geschwindigkeit größer als die Sollgeschwindigkeit ($\omega$c) dreht, das mindestens eine Fliehgewicht (4) mindestens auf Höhe eines Umfangsabschnitts (30), den es aufweist, in ein zweites rotationssymmetrisches Volumen (VE) um die erste Drehachse (D1), das an das erste rotationssymmetrische Volumen (VI) angrenzt, gelangt, und wobei der Umfangsabschnitt (30) in dem zweiten rotationssymmetrischen Volumen (VE) mit Regulierungsmitteln zusammenwirkt, die dafür ausgelegt sind, die Abbremsung des Drehteils (3) auszulösen und seine Drehgeschwindigkeit ($\omega$) auf die Sollgeschwindigkeit ($\omega$c) zurückzuführen, und die überschüssige Energie abzuführen, **dadurch gekennzeichnet, dass** entweder der Umfangsabschnitt (30) elektrisch leitend ist und die Regulierungsmittel gebildet sind durch Mittel zum Erzeugen mindestens eines veränderlichen Magnetfeldes in einer Kammer (8), die zumindest teilweise durch magnetisierte Teile begrenzt ist, wobei das veränderliche Magnetfeld Feldlinien aufweist, die in einer Weise gerichtet sind, dass die Wechselwirkung zwischen dem Umfangsabschnitt (30) und dem Magnetfeld Wirbelströme erzeugt, die bestrebt sind, das Drehteil abzubremsen, indem sie seiner Drehung entgegenwirken, oder dass der Umfangsabschnitt (30) aus einem magnetisierten Material gebildet ist und dass die Drehbewegung des Drehteils (3) und des Fliehgewichts (4) ein veränderliches oder wechselndes oder sinusförmiges Magnetfeld in einer Kammer (8) erzeugt, die zumindest teilweise durch leitende Teile begrenzt ist, deren Wechselwirkung mit dem Magnetfeld Wirbelströme erzeugt, die bestrebt sind, das Drehteil zu bremsen, indem sie seiner Drehung entgegenwirken.

2. Regler (1) für ein Uhrendrehteil oder ein Läutwerkdrehteil nach Anspruch 1, **dadurch gekennzeichnet, dass** das zweite rotationssymmetrische Volumen (VE) um die erste Drehachse (D1) an das erste rotationssymmetrische Volumen (VI) angrenzt und sich außerhalb hiervon befindet.

3. Regler (1) für ein Uhrendrehteil oder ein Läutwerkdrehteil nach Anspruch 1, **dadurch gekennzeichnet, dass** das zweite rotationssymmetrische Volumen (VE) um die erste Drehachse (D1) an das erste rotationssymmetrische Volumen (VI) angrenzt und sich innerhalb hiervon befindet.

4. Regler für ein Uhrendrehteil oder ein Läutwerkdrehteil (1) nach einem der vorhergehenden Ansprüche, **dadurch gekennzeichnet, dass** er Bremsmittel umfasst, die eingreifen, wenn sich der Umfangsteil (30) der Fliehgewichte (4) von dem ersten Volumen (VI) zu dem zweiten Volumen (VE) bewegt, um dem Umfangsteil (30) der Fliehgewichte (4) ein Bremsdrehmoment entgegenzusetzen, derart, dass das ausgeübte Bremsdrehmoment innerhalb des zweiten Volumens (VE) mit der radialen Position jedes Fliehgewichts ausgehend von der ersten Drehachse (D1) zunimmt.

5. Regler für ein Uhrendrehteil oder ein Läutwerkdrehteil (1) nach einem der vorhergehenden Ansprüche, **dadurch gekennzeichnet, dass** die Kammer (8) durch eine magnetisch isolierende Schutzabdeckung (9) aus einem nicht magnetischen Material, die eine magnetische Abschirmung bildet, begrenzt ist.

6. Regler (1) für ein Uhrendrehteil oder ein Läutwerkdrehteil nach einem der vorhergehenden Ansprüche, **dadurch gekennzeichnet, dass** die Rückstellmittel (7) so beschaffen sind, dass dann, wenn sich das Drehteil (3) mit einer Geschwindigkeit kleiner oder gleich der Sollgeschwindigkeit ($\omega$c) dreht, das mindestens eine Fliehgewicht (4) in dem ersten rotationssymmetrischen Volumen (VI) eingeschlossen gehalten wird, und dass andererseits dann, wenn sich das Drehteil (3) mit einer Geschwindigkeit größer als die Sollgeschwindigkeit ($\omega$c) dreht, zugelassen wird, dass das mindestens eine Fliehgewicht (4) zumindest auf Höhe eines Umfangsabschnitts (30), den es aufweist, in das zweite rotationssymmetrische Volumen (VE) gelangt.

7. Regler (1) für ein Uhrendrehteil oder ein Läutwerkdrehteil (1) nach einem der vorhergehenden Ansprüche, **dadurch gekennzeichnet, dass** die Rückstellmittel (7) elastische Rückstellmittel sind und eine Rückstellkraft in Richtung der ersten Drehachse (D1) auf einen Neben-Drehzapfen (72) ausüben, den das mindestens eine Fliehgewicht (4) aufweist, und eine dritte Drehachse (D3) parallel zu der ersten Drehachse (D1) und der zweiten Drehachse (D2) definieren, und dass die Rückstellmittel (7) eine erste Drehführung (74) um einen Hauptdrehzapfen (15) oder eine Welle um die erste Drehachse (D1), den/die das Drehteil (3) aufweist, und mindestens eine zweite Drehführung (73) um den Neben-Drehzapfen (72) um die dritte Drehachse (D3) umfassen, den das mindestens eine Fliehgewicht (4) aufweist.

8. Regler (1) für ein Uhrendrehteil oder ein Läutwerkdrehteil nach einem der Ansprüche 1 bis 6, **dadurch gekennzeichnet, dass** das Drehteil (3) eine Mehrzahl von Fliehgewichten (4) umfasst, die gleichmäßig beabstandet um die erste Drehachse (D1) verteilt sind, und dass die elastischen Rückstellmittel (7) eine erste Drehführung (74) um einen Hauptdrehzapfen (15) oder eine Welle um die erste Drehachse (D1), den/die das Drehteil (3) aufweist, und eine zweite Drehführung (73) um einen Neben-Drehzapfen (72) um eine dritte Drehachse (D3) umfassen, den jedes zu ihm gehörende Fliehgewicht (4) aufweist.

9. Regler (1) für ein Uhrendrehteil oder ein Läutwerkdrehteil nach Anspruch 7, **dadurch gekennzeichnet, dass** die elastischen Rückstellmittel (7) durch mindestens eine Feder (71) gebildet sind, die vorgespannt mit einem Wert, der einer radialen Bahn (CP) ihrer zweiten Drehführung (73) entspricht, längs einer radialen Richtung in Bezug auf die Drehachse (D1) angeordnet ist, wenn die Feder (71) durch ihre erste Führung (74) an dem Hauptdrehzapfen (15) zwischen einer entspannten Position der Feder (71) und einer eingehakten Position der Feder an dem Neben-Drehzapfen (72) des Fliehgewichts (4) geführt wird, wobei das Drehteil (3) und das Fliehgewicht (4) in einer Halteposition sind, und die Vorspannung bestrebt ist, den Neben-Drehzapfen (72) des Fliehgewichts (4) in der Einhakposition der Feder (71) radial zu der ersten Drehachse (D1) hin zu ziehen.

10. Regler (1) für ein Uhrendrehteil oder ein Läutwerkdrehteil nach einem der vorhergehenden Ansprüche, **dadurch gekennzeichnet, dass** dann, wenn die Regulierungsmittel durch Mittel zum Erzeugen mindestens eines veränderlichen Magnetfeldes gebildet sind, diese durch Permanentmagneten (12) gebildet sind, die beiderseits einer Kammer (8) angeordnet sind, in der der Umfangsteil (30) des mindestens einen Fliehgewichts (4) sich bewegen soll, wobei die Permanentmagneten (12) am inneren Umfang eines die Kammer (8) umgebenden Jochs (19) angeordnet sind.

11. Regler (1) für ein Uhrendrehteil oder ein Läutwerkdrehteil nach dem vorhergehenden Anspruch, **dadurch gekennzeichnet, dass** das Joch (19) beiderseits der Kammer (8) einen ersten Flansch (16), der eine erste Reihe von Permanentmagneten (12) trägt, und einen zweiten Flansch (17), der eine zweite Reihe von Permanentmagneten (12) trägt, umfasst, wobei der erste Flansch (16) und der zweite Flansch (17) relativ zueinander drehbar um die erste Drehachse (D1) beweglich sind, derart, dass je nach ihrer relativen Position die Feldlinien parallel zu der ersten Drehachse (D1) ausgerichtet oder schräg zu der Oberfläche eines Kegels oder eines rotationssymmetrischen Zylinders um die erste Drehachse (D1) in Bezug auf diese Letztere ausgerichtet sind.

12. Regler (1) für ein Uhrendrehteil oder ein Läutwerkdrehteil nach Anspruch 10, **dadurch gekennzeichnet, dass** das Joch (19) beiderseits der Kammer (8) einen ersten Flansch (16), der eine erste Reihe von Permanentmagneten (12) trägt, und einen zweiten Flansch (17), der eine zweite Reihe von Permanentmagneten (12) trägt, umfasst, wobei der erste Flansch (16) und der zweite Flansch (17) relativ zueinander längs der Richtung der ersten Drehachse (D1) verschiebbar sind, derart, dass der Wert ihres Luftspalts verändert wird.

13. Regler (1) für ein Uhrendrehteil oder ein Läutwerkdrehteil nach Anspruch 10, **dadurch gekennzeichnet, dass** das Joch (19) beiderseits der Kammer (8) einen ersten Flansch (16), der eine erste Reihe von Permanentmagneten (12) trägt, und einen zweiten Flansch (17), der eine zweite Reihe von Permanentmagneten (12) trägt, umfasst, wobei der erste Flansch (16) und der zweiten Flansch (17) relativ zueinander verschiebbar und/oder drehbeweglich längs der Richtung der ersten Drehachse (D1) unter der Wirkung des Eindringens des Umfangsteils (30) des mindestens einen Fliehgewichts (4) in ihren Luftspalt sind.

14. Regler (1) für ein Uhrendrehteil oder ein Läutwerkdrehteil nach Anspruch 10, **dadurch gekennzeichnet, dass** das Joch (19) beiderseits der Kammer (8) einen ersten Flansch (16), der eine erste Reihe von Permanentmagneten (12) trägt, und einen zweiten Flansch (17), der eine zweite Reihe von Permanentmagneten (12) trägt, umfasst, wobei der erste Flansch (16) und der zweite Flansch (17) relativ zueinander verschiebbar und/oder drehbeweglich längs der Richtung der ersten Drehachse (D1) unter der Wirkung eines die Energiequelle bildenden Federhauses sind.

15. Regler (1) für ein Uhrendrehteil oder ein Läutwerkdrehteil nach einem der Ansprüche 10 bis 14, **dadurch gekennzeichnet, dass** die Permanentmagneten (12) in Bezug auf die erste Drehachse (D1) radial beweglich angeordnet sind.

16. Regler (1) für ein Uhrendrehteil oder ein Läutwerkdrehteil nach Anspruch 9, **dadurch gekennzeichnet, dass** die Feder (71) dafür ausgelegt ist, eine Kraft nach die erste Drehachse (D1) auszuüben.

17. Regler (1) für ein Uhrendrehteil oder ein Läutwerkdrehteil nach dem vorhergehenden Anspruch, **dadurch gekennzeichnet, dass** die Steifigkeit der Feder (71) in einer Weise definiert ist, dass der Wert der radialen Kraft, die auf das Fliehgewicht (4) ausgeübt wird, jenseits der Vorspannungsbahn (CP) der Feder (71) eine im Wesentlichen affine Funktion der Winkelposition ($\alpha$) des Fliehgewichts (4) um den ersten Drehzapfen (6) auf der zweiten Drehachse (D2) in Bezug auf die Halteposition des Fliehgewichts (4) ist, und für die ein Wert null der radialen Kraft, als Absolutwert, der Vorspannungsbahn entspricht.

18. Regler (1) für ein Uhrendrehteil oder ein Läutwerkdrehteil nach Anspruch 9, **dadurch gekennzeichnet, dass** die Feder (71) aus Silicium oder Quarz oder einer ihrer Komponenten oder aus einem zumindest teilweise amorphen Material gebildet ist.

19. Musik- oder Läutwerkmechanismus für ein Zeitmessgerät oder eine Spieluhr, umfassend eine Energiequelle oder ein Federhaus und Mittel (2) zum Übertragen eines mechanischen Drehmoments von der Energiequelle oder dem Federhaus an das Drehteil zur Erzeugung von Musik oder eines Läutens, **dadurch gekennzeichnet, dass** die Übertragungsmittel (2) mindestens ein Drehteil (3) antreiben, das ein Regler (1) für ein Uhrendrehteil oder ein Läutwerkdrehteil nach einem der vorhergehenden Ansprüche umfasst.

20. Zeitmessgerät oder Spieluhr, umfassend ein Drehteil zur Erzeugung von Musik oder eines Läutens, **dadurch gekennzeichnet, dass** es einen Musik- oder Läutwerkmechanismus nach dem vorhergehenden Anspruch und/oder einen Regler (1) für ein Uhrendrehteil oder ein Läutwerkdrehteil nach einem der Ansprüche 1 bis 18 umfasst.

**Claims**

1. Timepiece wheel set or strike wheel set governor (1) for regulating the pivoting speed (w) of a wheel set (3) about a first pivot axis (D1), around a reference speed value ($\omega c$), wherein said wheel set (3) being arranged to be driven, via transmission means (2), by an energy source delivering a mechanical torque, said wheel set (3) includes at least one inertia-block (4) pivotally mounted about a primary pivot (6) defining a second pivot axis (D2) parallel to said first pivot axis (D1) and at a distance therefrom, said governor (1) including a means (7) of returning said at least one inertia block (4) towards said first pivot axis (D1), said at least one inertia block (4) being arranged so that, on the one hand, when said wheel set (3) pivots at a speed lower than or equal to said reference speed ($\omega c$), said at least one inertia block (4) remains confined within a first volume (VI) of revolution about said first pivot axis (D1), and on the other hand, when said wheel set (3) pivots at a higher speed than said reference speed ($\omega c$), said at least one inertia block (4) is engaged, at least in a peripheral portion (30) thereof, in a second volume (VE) of revolution about said first pivot axis (D1) contiguous with said first volume of revolution (VI), and said peripheral portion (30) cooperates in said second volume of revolution (VE) with a regulating means arranged for braking said wheel set (3) and returning the pivoting speed (w) thereof to said reference speed ($\omega$c), and for dissipating the surplus energy, **characterized in that** said peripheral portion (30) is, either electrically conductive and said regulating means is formed by a means of generating at least one variable magnetic field in a chamber (8) at least partially delimited by magnetised parts, said variable magnetic field including field lines oriented so that the interaction between said peripheral portion (30) and said magnetic field generates eddy currents that tend to brake said wheel set by resisting the pivoting thereof, or **in that** said peripheral portion (30) is made of magnetised material, and the pivoting movement of said wheel set (3) and said inertia block (4) creates a variable, or alternate, or sinusoidal magnetic field in a chamber (8) at least partially delimited by conductive parts, the interaction of which with said magnetic field generates eddy currents that tend to brake said wheel set by resisting the pivoting thereof.

2. Timepiece wheel set or strike wheel set governor (1) according to claim 1, **characterized in that** said second volume (VE) of revolution about said first pivot axis (D1) is contiguous with and external to said first volume of revolution (VI).

3. Timepiece wheel set or strike wheel set governor (1) according to claim 1, **characterized in that** said second volume (VE) of revolution about said first pivot axis (D1) is contiguous with and internal to said first volume of revolution (VI).

4. Timepiece wheel set or strike wheel set governor (1) according to any of the preceding claims, **characterized in that** it includes a braking means which acts when said peripheral portion (30) of the inertia blocks (4) passes from said first volume (VI) to said second volume (VE) to apply a braking torque to the peripheral portion (30) of said inertia blocks (4) so that the braking torque applied grows with the radial position of each said inertia block from the first pivot axis (D1) at the centre of said second volume (VE).

5. Timepiece wheel set or strike wheel set governor (1) according to any of the preceding claims, **characterized in that** said chamber (8) is delimited by a magnetic insulation screen (9), made of non-magnetic material, forming a magnetic shield.

6. Timepiece wheel set or strike wheel set governor (1) according to any of the preceding claims, **characterized in that**, when said wheel set (3) pivots at a speed lower than or equal to said reference speed (wc), said return means (7) is arranged to keep said at least one inertia block (4) confined within said first internal volume of revolution (VI) and, also, when said wheel set (3) pivots at a higher speed than said reference speed (wc), to allow said at least one inertia block (4) to engage, at least in a peripheral portion thereof, in said second volume of revolution (VE).

7. Timepiece wheel set or strike wheel set governor (1) according to any of the preceding claims, **characterized in that** said return means (7) is an elastic return means, and exerts a return force, in the direction of said first pivot axis (D1), on a secondary pivot (72) comprised in said at least one inertia block (4) and defining a third pivot axis (D3) parallel to said first pivot axis (D1) and said second pivot axis (D2), and **in that** said return means (7) includes a first pivot guide (74) about a main pivot (15) or arbour comprised in said wheel set (3) about said first pivot axis (D1), and which includes at least a second pivot guide (73) about said secondary pivot (72) comprised in said at least one inertia block (4) about said third pivot axis (D3).

8. Timepiece wheel set or strike wheel set governor (1) according to any of the preceding claims, **characterized in that** said wheel set (3) includes a plurality of said inertia blocks (4) arranged equidistantly about said first pivot axis (D1), and **in that** said elastic return means (7) includes a first pivot guide (74) about a main pivot (15) or arbour comprised in said wheel set (3) about said first pivot axis (D1), and includes a second pivot guide (73) about a secondary pivot (72) comprised in each said inertia block (4) about a third pivot axis (D3) specific thereto.

9. Timepiece wheel set or strike wheel set governor (1) according to claim 7, **characterized in that** said said elastic return means (7) is formed by at least one spring (71) which is assembled preloaded, by a value corresponding to a radial travel (CP) of said second pivot guide (73) thereof, in a radial direction relative to said first pivot axis (D1), when said spring (71) is guided by said first guide (74) thereof on said main pivot (15), between an uncoupled position of said spring (71) and a position where said spring is coupled on said secondary pivot (72) of said inertia block (4), said wheel set (3) and said inertia block (4) being in the stopped position, and said preload tending, in the coupled position of said spring (71), to draw said secondary pivot (72) of said inertia block (4) radially towards said first pivot axis (D1).

10. Timepiece wheel set or strike wheel set governor (1) according to any of the preceding claims, **characterized in that**, when said regulating means is formed by said means of generating at least one variable magnetic field, said means is formed by permanent magnets (12), which are arranged on both sides of a chamber (8) in which said peripheral portion (30) of said at least one inertia block (4) is arranged to move, said permanent magnets (12) being arranged on the inner periphery of a yoke (19) surrounding said chamber (8).

11. Timepiece wheel set or strike wheel set governor (1) according to the preceding claim, **characterized in that** said yoke (19) includes, on both sides of said chamber (8), a first flange (16) carrying a first series of said permanent magnets (12), and a second flange (17) carrying a second series of said permanent magnets (12), and said first flange (16) and second flange (17) are pivotally mobile relative to each other about said first pivot axis (D1), so as either, according to the relative position thereof, to align said field lines parallel to said first pivot axis (D1), or to orient said field lines obliquely, at the surface of a cone or cylinder of revolution about said first pivot axis (D1), relative to said pivot axis.

12. Timepiece wheel set or strike wheel set governor (1) according to claim 10, **characterized in that** said yoke (19) includes, on both sides of said chamber (8), a first flange (16) carrying a first series of said permanent magnets (12), and a second flange (17) carrying a second series of said permanent magnets (12), and said first flange (16) and second flange (17) are mobile in translation relative to each other in the direction of said first pivot axis (D1) so as to modify the value of the air gap between said flanges.

13. Timepiece wheel set or strike wheel set governor (1) according to claim 10, **characterized in that** said yoke (19) includes, on both sides of said chamber (8), a first flange (16) carrying a first series of said permanent magnets (12), and a second flange (17) carrying a second series of said permanent magnets (12), and said first flange (16) and second flange (17) are mobile in translation and/or pivotally mobile relative to each other in the direction of said first pivot axis (D1), due to the effect of said peripheral portion (30) of said at least one inertia block (4) penetrating the air gap between said flanges.

14. Timepiece wheel set or strike wheel set governor (1) according to claim 10, **characterized in that** said yoke (19) includes, on both sides of said chamber (8), a first flange (16) carrying a first series of said permanent magnets (12), and a second flange (17) carrying a second series of said permanent magnets (12), and said first flange (16) and second flange (17) are mobile in translation and/or pivotally mobile relative to each other in the direction of said first pivot axis (D1), under the action of a barrel forming said energy source.

15. Timepiece wheel set or strike wheel set governor (1) according to any of claims 10 to 14, **characterized in that** said permanent magnets (12) are mounted to be radially mobile relative to said first pivot axis (D1).

16. Timepiece wheel set or strike wheel set governor (1) according to claim 9, **characterized in that** said spring (71) is arranged to exert a return force toward said first pivot axis (D1).

17. Timepiece wheel set or strike wheel set governor (1) according to the preceding claim, **characterized in that** said the rigidity of said spring (71) is defined such that the radial force value applied to said inertia block (4), beyond th preload travel (CP) of the spring (71), is a substantially linear function of the angular position ($\alpha$) of said inertia block (4) about said primary pivot (6) on said second pivot axis (D2), relative to the stopped position of said inertia block (4), and for which a zero value of said radial force corresponds, in absolute value, to said preload travel.

18. Timepiece wheel set or strike wheel set governor (1) according to claim 9, **characterized in that** said spring (71) is made of silicon, or quartz or a compound thereof, or of an at least partially amorphous material.

19. Musical or striking mechanism for a timepiece or musical box, including an energy source or barrel, and a means (2) of transmitting mechanical torque from said energy source or said barrel to a wheel set for generating music or a strike wheel set, **characterized in that** said transmission means (2) drives at least one said wheel set (3) comprised in a timepiece wheel set or strike wheel set governor (1) according to any of the preceding claims.

20. Timepiece or musical box including a wheel set for generating music or a strike wheel set, **characterized in that** it includes a musical or striking mechanism according to the preceding claim, and/or a timepiece wheel set or strike wheel set governor (1) according to any of claims 1 to 18.

# Fig. 1

# Fig. 3

# Fig. 4

# Fig. 5

Fig. 2

EP 2 487 547 B1

Fig. 6

Fig. 7

Fig. 8

Fig. 9

Fig. 10

Fig. 11

Fig. 12

Fig. 13

Fig. 14

Fig. 15

Fig. 16

Fig. 17

EP 2 487 547 B1

Fig. 18

# Fig. 19

# Fig. 20

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1772791 A1

- CH 17747 A

**Littérature non-brevet citée dans la description**

- **M MOTEKI et al.** Development of spring drive sonnerie. *les actes du congrès européen de chronométrie SOCIETE SUISSE DE CHRONOMETRIE,* 26 Septembre 2007, ISSN 1023-2699, 115-118